# EUROPÄISCHE PATENTSCHRIFT

(11) **EP 4 230 354 B1**
(45) Veröffentlichungstag und Bekanntmachung des Hinweises auf die Patenterteilung: **02.09.2026**
(21) Anmeldenummer: 23166476.4
(22) Anmeldetag: 07.04.2015
(51) Int. Cl.: B25F 5/00

(54) **SYSTEM MINDESTENS UMFASSEND EINEN ELEKTRONISCH KOMMUTIERTEN ELEKTROMOTOR EINER DEFINIERTEN BAUGRÖSSE UND EINE WIEDERAUFLADBARE BATTERIE MINDESTENS EINER SPANNUNGSKLASSE**
SYSTEM AT LEAST COMPRISING AN ELECTRONICALLY COMMUTATED ELECTRIC MOTOR OF A DEFINED CONSTRUCTION SIZE, AND A RECHARGEABLE BATTERY OF AT LEAST ONE VOLTAGE CLASS
SYSTÈME COMPORTANT AU MOINS UN MOTEUR ÉLECTRIQUE À COMMUTATION ÉLECTRONIQUE D'UNE DIMENSION DÉFINIE ET UNE BATTERIE RECHARGEABLE D'AU MOINS UNE CLASSE DE TENSION

(30) Priorität: 10.06.2014 DE 102014211046
(43) Veröffentlichungstag der Anmeldung: 23.08.2023
(62) Dokumentnummer(n) der früheren Anmeldung(en) nach Art. 76 EPÜ: 15713777.9 / 3 154 747
(73) Patentinhaber: Robert Bosch GmbH, 70442 Stuttgart (DE)
(72) Erfinder: Esenwein, Florian, 70771 Leinfelden-Echterdingen (DE); Schadow, Joachim, 70771 Leinfelden-Echterdingen (DE)

(56) Entgegenhaltungen:
- EP-A1- 2 712 713
- US-A1- 2005 270 754
- US-A1- 2010 088 843
- US-A1- 2014 131 059

## Beschreibung

Die Erfindung betrifft ein System mindestens umfassend einen elektronisch kommutierten Elektromotor einer definierten Baugröße und eine wiederaufladbare Batterie mindestens einer Spannungsklasse.

### Stand der Technik

US 2014/0131059 A1 offenbart eine Handwerkzeugmaschine mit elektronisch kommutiertem Elektromotor und wiederaufladbarer Batterie.

### Offenbarung der Erfindung

Das erfindungsgemäße System mit den Merkmalen des unabhängigen

Anspruchs 1 umfasst zumindest mindestens eine erste Handwerkzeugmaschine, die mindestens eine erste Schnittstelle aufweist, die mit mindestens einer wiederaufladbaren Batterie einer Spannungsklasse korrespondieren kann. Unter "korrespondieren" soll hier insbesondere verstanden werden, dass eine wiederaufladbare Batterie zur elektrischen Energieversorgung der Handwerkzeugmaschine vorgesehen ist. Die elektrische Energie kann über die Schnittstelle der Handwerkzeugmaschine übertragen werden. Die Energieübertragung kann kabelgebunden oder kabellos erfolgen. Eine kabellose Energieübertragung kann beispielsweise über induktive Energieübertragung erfolgen.

Das System umfasst des Weiteren mindestens einen elektronisch kommutierten Elektromotor einer definierten Baugröße. Unter einer Baugröße soll hier eine Länge und ein Durchmesser verstanden werden. Die Länge des elektronisch kommutierten Elektromotors ist über eine Paketlänge definiert. Der Durchmesser wird vom Durchmesser eines Motorgehäuses gebildet.

Mindestens eine erste Elektronikeinheit ist zumindest dazu vorgesehen, den elektronisch kommutierten Elektromotor zu steuern und/oder zu regeln. Unter"steuern" soll insbesondere verstanden werden, dass die Elektronikeinheit unabhängig eines Parameters des elektronisch kommutierten Elektromotors ein Ansteuersignal für den elektronisch kommutierten Elektromotor bereit stellt. Unter "regeln" soll insbesondere verstanden werden, dass die Elektronikeinheit in Abhängigkeit eines Parameters des elektronisch kommutierten Elektromotors ein Ansteuersignal für den elektronisch kommutierten Elektromotor bereit stellt.

Mindestens ein erstes Schaltelement aktiviert den elektronisch kommutierten Elektromotor. Unter "aktivieren" soll verstanden werden, dass bei Betätigung des Schaltelements der elektronisch kommutierte Elektromotor zu rotieren beginnt.

Das System umfasst des Weiteren mindestens eine zweite Handwerkzeugmaschine, die mindestens eine zweite Schnittstelle aufweist, die mit der wiederaufladbaren Batterie einer Spannungsklasse korrespondieren kann. Mindestens eine zweite Elektronikeinheit ist dazu vorgesehen, den elektronisch kommutierten Elektromotor zu steuern und/oder zu regeln. Mindestens ein zweites Schaltelement ist zur Aktivierung des elektronisch kommutierten Elektromotors vorgesehen.

Das System umfasst des Weiteren mindestens eine wiederaufladbare Batterie einer Spannungsklasse. Erfindungsgemäß kann die wiederaufladbare Batterie einer Spannungsklasse sowohl mit der ersten Schnittstelle der ersten Handwerkzeugmaschine korrespondieren als auch mit der zweiten Schnittstelle der zweiten Handwerkzeugmaschine korrespondieren. Unter "korrespondieren" soll hier insbesondere "anschließen" oder "anbringen" verstanden werden. Vorteilhafterweise kann die wiederaufladbare Batterie einer Spannungsklasse somit entweder die erste Handwerkzeugmaschine mit elektrischer Energie versorgen oder die zweite Handwerkzeugmaschine mit elektrischer Energie versorgen. Das hat den Vorteil, dass das erfindungsgemäße System flexibel gehandhabt werden kann.

Durch die in den Unteransprüchen aufgeführten Merkmale sind vorteilhafte Weiterbildungen des Systems nach dem Hauptanspruch möglich.

Erfindungsgemäß wird der elektronisch kommutierte Elektromotor von einem ersten Gehäuseteil der Handwerkzeugmaschine aufgenommen.

Vorteilhafterweise definiert der elektronisch kommutierte Elektromotor eine erste Achse, die koaxial zu einer Abtriebswelle liegt. Die Abtriebswelle ist mindestens dazu vorgesehen ist, ein Bearbeitungswerkzeug anzutreiben. Erfindungsgemäß treibt der elektronisch kommutierte Elektromotor die Abtriebswelle direkt an. Unter "direkt" soll hier insbesondere verstanden werden, dass der elektronisch kommutierte Elektromotor über die Abtriebswelle mit dem Bearbeitungswerkzeug ohne Zwischenschaltung eines konventionellen Getriebes verbunden ist. Dadurch wird eine hohe Effizienz bei Minimierung des Verschleißes erreicht. Dadurch, dass die Länge des elektronisch kommutierten Elektromotors eine Länge des ersten Gehäuseteils definiert, kann eine kompakte Bauweise des ersten Gehäuseteils erreicht werden, da Bauraum durch Wegfall eines konventionellen Getriebes gespart werden kann. Dadurch wird Bauraum in der Handwerkzeugmaschine geschaffen, der geeignet ist, Elektromotoren aufzunehmen, die geeignet sind, hohe Drehmomente abzugeben und deshalb unter Verzicht auf ein Getriebe als Direktantrieb arbeiten können.

Erfindungsgemäß wird die Elektronikeinheit von einem zweiten Gehäuseteil aufgenommen. Die Elektronikeinheit ist erfindungsgemäß zumindest in einer x-Richtung des zweiten Gehäuseteils zumindest teilweise zwischen der Schnittstelle und dem ersten Gehäuseteil angeordnet. Unter der "x-Richtung" soll hier die Haupterstreckungsrichtung des zweiten Gehäuseteils verstanden werden. Auf diese Weise wird eine kompakte Bauweise des zweiten Gehäuseteils erreicht. In einer vorteilhaften Ausführungsform ist die wiederaufladbare Batterie zumindest teilweise in das zweite Gehäuseteil integriert ist. Besonders vorteilhaft ist es, wenn das zweite Gehäuseteil einen Großteil einer Batterielänge I_{B} aufnimmt. Unter einem "Großteil einer Batterielänge I_{B}" soll hier insbesondere ein Anteil, der größer als 50% der Batterielänge I_{B} entspricht, verstanden werden. Dadurch wird eine in Haupterstreckungsrichtung der Handwerkzeugmaschine kompakte Bauweise erreicht.

Vorteilhafterweise definiert die wiederaufladbare Batterie mit dem zweiten Gehäuseteil eine zweite Achse, die koaxial zur Einschubrichtung der wiederaufladbaren Batterie liegt.

In einer weiteren vorteilhaften Ausführungsform ist die wiederaufladbare Batterie zumindest teilweise am zweiten Gehäuseteil angeordnet und ein Großteil der Batterielänge I_{B} liegt außerhalb des zweiten Gehäuseteils, wobei die wiederaufladbare Batterie mit dem zweiten Gehäuseteil eine zweite gemeinsame Achse bildet, die winklig, insbesondere rechtwinklig zur Einschubrichtung der wiederaufladbaren Batterie liegt. Auf diese Weise wird eine weitere in Haupterstreckungsrichtung der Handwerkzeugmaschine kompakte Bauweise erreicht.

In einer vorteilhaften Ausführungsform liegt die erste Achse in einem Winkel a zur zweiten Achse, der zwischen 60° und 120°, besonders zwischen 80° und 100 ° liegt, bevorzugt aber ungefähr 90° beträgt.

In einer weiteren vorteilhaften Ausführungsform liegt die erste Achse in einem Winkel a zur zweiten Achse, der zwischen 10° und 20°, besonders zwischen 5° und 10 ° liegt, bevorzugt aber ungefähr 0° beträgt.

Vorteilhafterweise ist das zweite Gehäuseteil als Handgriff ausgebildet. Besonders vorteilhaft dient das zweite Gehäuseteil als Handgriff. Unter dem Begriff "Handgriff" soll hierbei insbesondere ein Bauteil verstanden werden, um das zumindest teilweise mindesten eine Hand eines Bedieners gelegt werden kann, um die Handwerkzeugmaschine zu führen.

Vorteilhafterweise ist eine Handwerkzeugmaschine mit einer mechanischen Schnittstelle ausgestattet, die es erlaubt, die Handwerkzeugmaschine mit der wiederaufladbaren Batterie zu verbinden beziehungsweise die Verbindung wieder zu lösen. Damit ist die wiederaufladbare Batterie austauschbar, was eine flexible Handhabung des Systems ermöglicht.

Vorteilhafterweise ist das Schaltelement im zweiten Gehäuseteil angeordnet, wobei das Schaltelement als Schaltschieber, als Totmannschalter, als Gasgebeschalter oder als Arretierschalter ausgeführt sein kann. Es ist aber auch denkbar, dass das Schaltelement als elektronischer Schalter, als Sensorschalter oder dergleichen ausgeführt ist. Mehrere Schaltelemente können ein Schaltsystem ausbilden, aus dem flexibel ausgewählt werden kann.

In einer vorteilhaften Ausführungsform des elektronisch kommutierten Elektromotors weist der elektronisch kommutierte Elektromotor eine Länge l₁ auf, die zwischen 12 und 30 mm, besonders zwischen 15 und 25 mm, bevorzugt aber zwischen 18 und 24 mm liegt. Des Weiteren weist in dieser Ausführungsform der elektronisch kommutierte Elektromotor einen Durchmesser d₁ auf, der zwischen 30 und 50 mm, besonders zwischen 35 und 44 mm liegt, bevorzugt aber 38 mm beträgt. Auf diese Weise wird eine leistungsfähige Handwerkzeugmaschine verbunden mit einer kompakten Bauweise des ersten Gehäuseteils erreicht.

In einer weiteren vorteilhaften Ausführungsform des elektronisch kommutierten Elektromotors weist der elektronisch kommutierte Elektromotor eine Länge l₂ auf, die zwischen 10 und 30 mm, besonders zwischen 15 und 25 mm liegt, bevorzugt aber 20 mm beträgt. Des Weiteren weist in dieser Ausführungsform der elektronisch kommutierte Elektromotor einen Durchmesser d₂ auf, der zwischen 30 und 50 mm, besonders zwischen 35 und 45 mm liegt, bevorzugt aber 44 mm beträgt. Auf diese Weise wird eine leistungsfähige Handwerkzeugmaschine verbunden mit einer kompakten Bauweise des ersten Gehäuseteils erreicht.

In einer weiteren vorteilhaften Ausführungsform des elektronisch kommutierte Elektromotors weist der elektronisch kommutierte Elektromotor eine Länge l₃ auf, die zwischen 10 und 35 mm, besonders zwischen 15 und 30 mm liegt, bevorzugt aber 26 mm beträgt. Des Weiteren weist in dieser Ausführungsform der elektronisch kommutierte Elektromotor einen Durchmesser d₃ auf, der zwischen 40 und 60 mm, besonders zwischen 45 und 55 mm liegt, bevorzugt aber 50 mm beträgt. Auf diese Weise wird eine leistungsfähige Handwerkzeugmaschine verbunden mit einer kompakten Bauweise des ersten Gehäuseteils erreicht.

Vorteilhafterweise kann der elektronisch kommutierte Elektromotor als Innenläufermotor oder als Außenläufermotor ausgebildet sein. Ist der elektronisch kommutierte Elektromotor ein Innenläufermotor, sind hohe Drehzahlen und eine hohe Leistungsdichte erreichbar. Ist der elektronisch kommutierte Elektromotor ein Außenläufermotor, ist der elektromotorische Antrieb robust ausgelegt und kann aus dem Stand heraus hohe Drehmomente liefern. Ein solcher Antrieb eignet sich demnach besonders für Anwendungen, bei denen hohe Drehmomente insbesondere bei geringen Drehzahlen gefordert sind.

Vorteilhafterweise weist der elektronisch kommutierte Elektromotor einen Rotor und ein Sensorelement auf. Das Sensorelement ist vorteilhafterweise dazu vorgesehen, eine Winkelstellung des Rotors zu erkennen, welche von der Elektronikeinheit ausgewertet wird. Damit kann besonders vorteilhaft eine Kommutierung erfolgen und das erforderliche Drehmoment des elektronisch kommutierten Elektromotors erzeugt werden. Es ist aber auch vorstellbar, dass die Kommutierung sensorlos erfolgt.

In einer besonders vorteilhaften Ausführungsform liegt eine Länge des ersten Gehäuseteils zwischen 50 und 150 mm, insbesondere zwischen 80 und 120 mm. Besonders bevorzugt beträgt die Länge des ersten Gehäuseteils aber 100 mm. Dies wird durch die kompakte Bauweise des elektronisch kommutieren Elektromotors realisiert, der maßgeblich die Länge des ersten Gehäuseteils definiert.

Vorteilhafterweise ist die Elektronikeinheit mit dem elektronisch kommutierten Elektromotor verbunden. Dadurch kann vorteilhafterweise mindestens ein den elektronisch kommutierten Elektromotor betreffender Parameter überwacht werden. Der Parameter kann eine Drehzahl, ein Strom und/oder eine Spannung des elektronisch kommutierten Elektromotors sein. Die Elektronikeinheit errechnet mittels eines Sollwert- Istwert-Vergleichs mindestens eines Wertes des Parameters, der den elektronisch kommutierten Elektromotor betrifft, mindestens ein Ansteuersignal für den elektronisch kommutieren Elektromotor.

Vorteilhafterweise ist die Elektronikeinheit mit einem internen Schalter verbunden. Unter einem internen Schalter soll hier ein Schalter verstanden werden, der durch Betätigung des externen Schaltelements aktiviert wird.

Hierbei kann vorteilhafterweise mindestens ein den internen Schalter betreffender Parameter überwacht werden. Der Parameter kann ein Kurzschlusstrom sein, der über einen Schaltkontakt fließt. Die Elektronikeinheit errechnet mittels eines Sollwert-Istwert-Vergleichs mindestens eines Wertes des Parameters, der den internen Schalter betrifft, mindestens ein Ansteuersignal für den elektronisch kommutieren Elektromotor.

Vorteilhafterweise kann die Elektronikeinheit mit der wiederaufladbaren Batterie verbunden werden. Dadurch kann vorteilhafterweise mindestens ein die wiederaufladbare Batterie betreffender Parameter überwacht werden. Der Parameter ist mindestens eine Kapazität der wiederaufladbaren Batterie und/oder ein Überlastzustand der wiederaufladbaren Batterie. Die Elektronikeinheit errechnet mittels eines Sollwert- Istwert-Vergleichs mindestens eines Wertes des Parameters, der die wiederaufladbare Batterie betrifft, mindestens ein Ansteuersignal für den elektronisch kommutieren Elektromotor.

Bevorzugt liegt die Batteriespannung in einem Bereich zwischen 3,6 und 42V, insbesondere zwischen 7,2 und 18V. Besonders bevorzugt beträgt die Batteriespannung aber 10,8 V. Die Werte der Batteriespannung berücksichtigen nicht mögliche Batteriespannungsschwankungen.

Damit der elektronisch kommutierte Elektromotor in einem optimalen Arbeitspunkt betrieben werden beziehungsweise effizient arbeiten kann, kann in einer vorteilhaften Ausführungsform zwischen einem Ecomodus und einem Boostmodus umgeschaltet werden.

Unter einem "Ecomodus" soll insbesondere eine Modus verstanden werden, in welchem der elektronisch kommutierte Elektromotor besonders effizient betrieben wird. Unter "effizient" soll hier verstanden werden, dass der elektronisch kommutierte Elektromotor im optimalen Arbeitspunkt betrieben wird.

Unter einem "Boostmodus" soll ein Modus verstanden werden, in welchem der elektronisch kommutierte Elektromotor besonders leistungsfähig betrieben wird. Die Leistungsanforderung an den elektronisch kommutierten Elektromotor kann dabei zeitlich begrenzt sein und ggf. im Überlastbereich des elektronisch kommutierten Elektromotors liegen. Der Boostmodus ist über einen Schalter aktivierbar. Im Boostmodus liegt die Leistungsüberhöhung des elektronisch kommutierten Elektromotors zwischen 10% und 100%, besonders zwischen 20% und 50%, bevorzugt aber bei 33%. Die zeitliche Begrenzung des Boostmodus liegt zwischen 0 und 5min, besonders zwischen 0 und 2,5min. Bevorzugt liegt die zeitliche Begrenzung des Boostmodus zwischen 30s und 1min.

Bevorzugt ist die Handwerkzeugmaschine mindestens in einer der folgenden Ausführungsform ausgeführt:
a. Winkelschleifer
b. Exzenterschleifer
c. Geradschleifer
d. oszillierendes Multitool
e. Oberfräse
f. Elektroschaber
g. Stichsäge
h. Kreissäge
i. Nietgerät
j. Sander

Weitere Vorteile und zweckmäßige Ausführungen sind der Figurenbeschreibung und den Zeichnungen zu entnehmen.

### Zeichnungen

In den Zeichnungen sind das erfindungsgemäße System, die Komponenten sowie die Handwerkzeugmaschinen gezeigt.

Es zeigen:
- Figur 1: das erfindungsgemäße System in schematischer Darstellung,
- Figur 2: eine Teilansicht einer ersten Handwerkzeugmaschine des erfindungsgemäßen Systems in schematischer Darstellung,
- Figur 3: eine Teilansicht eines zweiten Gehäuseteils in schematischer Darstellung,
- Figur 4: eine Teilansicht einer zweiten Handwerkzeugmaschine des erfindungsgemäßen Systems in schematischer Darstellung,
- Figur 5: ein erster elektronisch kommutierter Elektromotor definierter Baugröße in schematischer Darstellung,
- Figur 5a: eine Teilansicht des ersten elektronisch kommutierten Elektromotors definierter Baugröße in schematischer Darstellung,
- Figur 6: ein zweiter elektronisch kommutierter Elektromotor definierter Baugröße in schematischer Darstellung,
- Figur 6a: eine Teilansicht des zweiten elektronisch kommutierten Elektromotors definierter Baugröße in schematischer Darstellung,
- Figur 7: ein dritter elektronisch kommutierter Elektromotor definierter Baugröße in schematischer Darstellung,
- Figur 7a: eine Teilansicht des dritten elektronisch kommutierten Elektromotors definierter Baugröße in schematischer Darstellung,
- Figur 8: eine Teilansicht eines Außenläufermotors in schematischer Darstellung,
- Figur 9: eine zweite Ausführungsform der ersten Handwerkzeugmaschine des erfindungsgemäßen Systems in schematischer Darstellung ,
- Figur 10: eine dritte Ausführungsform der ersten Handwerkzeugmaschine des erfindungsgemäßen Systems in schematischer Darstellung ,
- Figur 11: eine dritte Handwerkzeugmaschine des erfindungsgemäßen Systems in schematischer Darstellung,
- Figur 11a: eine Teilansicht der dritten Handwerkzeugmaschine des erfindungsgemäßen Systems in schematischer Darstellung,
- Figur 12: eine Teilansicht der zweiten Handwerkzeugmaschine des erfindungsgemäßen Systems in schematischer Darstellung,
- Figur 12a: eine Teilansicht einer weiteren Ausführungsform der zweiten Handwerkzeugmaschine des erfindungsgemäßen Systems in schematischer Darstellung,
- Figur 13: eine Teilansicht einer vierten Handwerkzeugmaschine des erfindungsgemäßen Systems in schematischer Darstellung,
- Figur 14: eine fünfte Handwerkzeugmaschine des erfindungsgemäßen Systems in schematischer Darstellung,
- Figur 15: eine Teilansicht einer sechsten in Handwerkzeugmaschine des erfindungsgemäßen Systems schematischer Darstellung,
- Figur 15a: eine Ansicht der sechsten Handwerkzeugmaschine des erfindungsgemäßen Systems, teilweise in Explosivdarstellung,
- Figur 15b: eine Ansicht einer weiteren Ausführungsform der sechsten Handwerkzeugmaschine des erfindungsgemäßen Systems in schematischer Darstellung,
- Figur 16: eine siebente Handwerkzeugmaschine des erfindungsgemäßen Systems in schematischer Darstellung,
- Figur 17: eine achte Handwerkzeugmaschine des erfindungsgemäßen Systems in schematischer Darstellung,
- Figur 18: eine neunte Handwerkzeugmaschine des erfindungsgemäßen Systems in schematischer Darstellung,
- Figur 19: eine zehnte Handwerkzeugmaschine des erfindungsgemäßen Systems in schematischer Darstellung.

### Beschreibung

Für die in den unterschiedlichen Ausführungsbeispielen vorkommenden gleichen Bauteile werden dieselben Bezugszahlen verwendet.

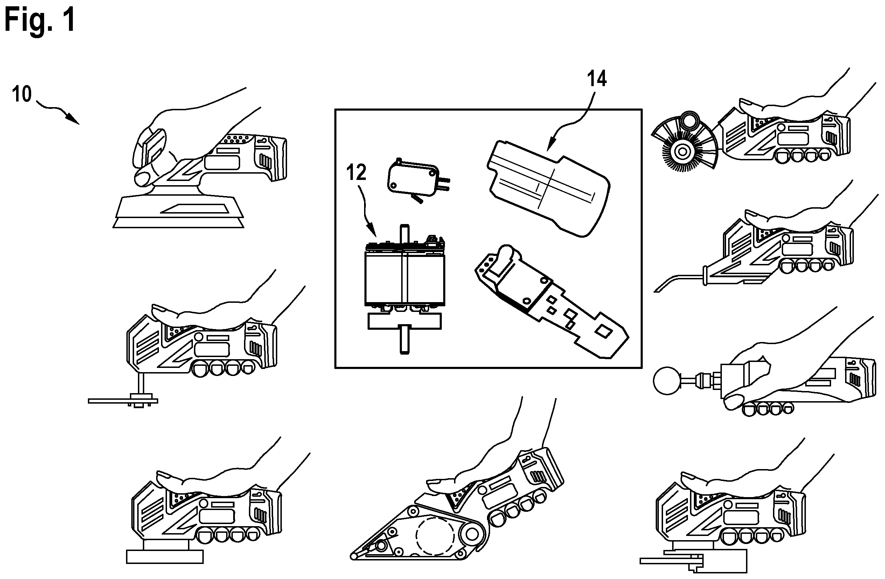

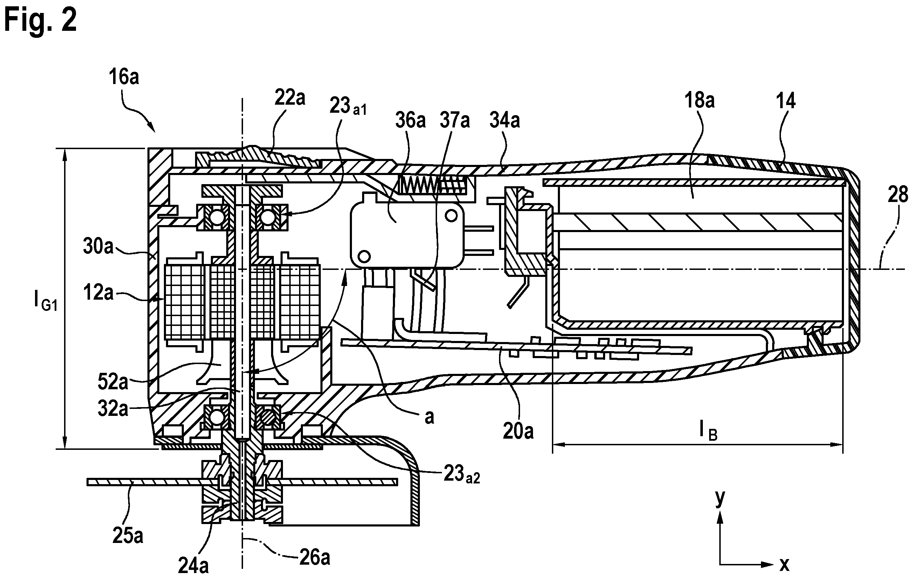

Figur 1 zeigt ein System 10, das einen elektronisch kommutierten Elektromotor 12 einer definierten Baugröße und eine wiederaufladbare Batterie 14 einer Spannungsklasse umfasst. Die wiederaufladbare Batterie 14 dient als elektrische Energiequelle für verschiedene Handwerkzeugmaschinen 16a bis 16j, mindestens aber für eine erste Handwerkzeugmaschine 16a, wie in Figur 2 dargestellt. Im Ausführungsbeispiel in Figur 2 ist die Handwerkzeugmaschine 16a als Winkelschleifer ausgebildet. In einer anderen Ausführungsform ist die Handwerkzeugmaschine 16b bis 16j als Exzenterschleifer, als Geradschleifer, als oszillierendes Multitool, als Oberfräse, als Elektroschaber, als Stichsäge, als Kreissäge, als Nietgerät oder als Sander ausgebildet. Die erste Handwerkzeugmaschine 16a ist mit einem elektronisch kommutierten Elektromotor 12a und einer wiederaufladbaren Batterie 14 ausgestattet. Der elektronisch kommutierte Elektromotor 12a weist in gewissen Fertigungstoleranzgrenzen eine definierte Baugröße auf. Zwischen dem elektronisch kommutierten Elektromotor 12a und der wiederaufladbaren Batterie 14 ist eine erste Schnittstelle 18a für die wiederaufladbare Batterie 14 angeordnet. Eine Elektronikeinheit 20a ist dazu vorgesehen, den elektronisch kommutierten Motor 12a zu steuern und/oder zu regeln. Bei Betätigung eines Schaltelements 22a wird der elektronisch kommutierte Elektromotor 12a aktiviert.

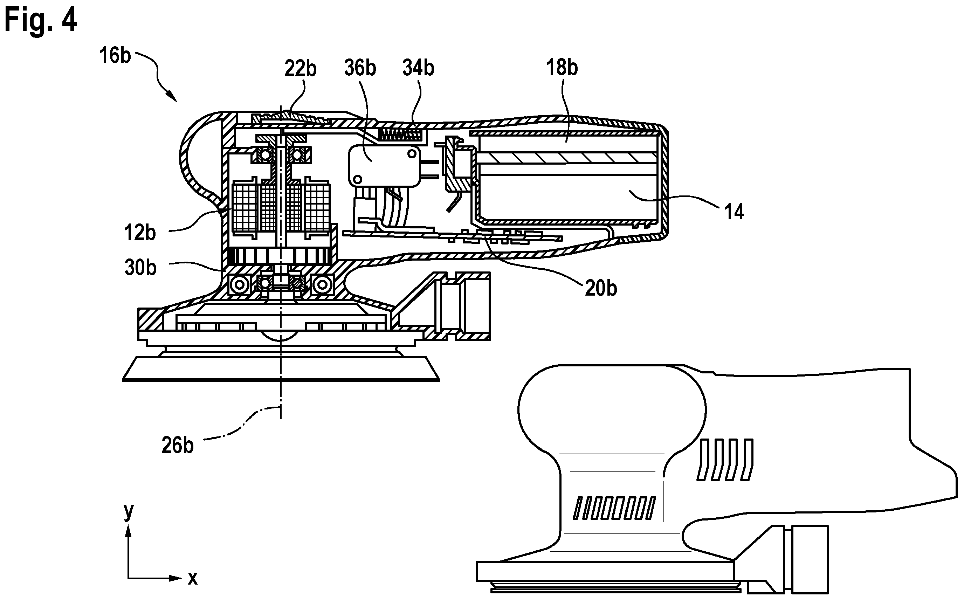

Eine zweite Handwerkzeugmaschine 16b ist in Figur 4 als Exzenterschleifer dargestellt. Die zweite Handwerkzeugmaschine 16b ist mit einem elektronisch kommutierten Elektromotor 12b definierter Baugröße und einer wiederaufladbaren Batterie 14 ausgestattet. Zwischen dem elektronisch kommutierten Elektromotor 12b und der wiederaufladbaren Batterie 14 ist eine zweite Schnittstelle 18b angeordnet. Eine zweite Elektronikeinheit 20b ist dazu vorgesehen, den elektronisch kommutierten Elektromotor 12b zu steuern und/oder zu regeln. Bei Betätigung eines zweiten Schaltelements 22b wird der elektronisch kommutierte Elektromotor 12b aktiviert. Die wiederaufladbare Batterie 14 ist dazu vorgesehen, sowohl an der ersten Schnittstelle 18a anbringbar zu sein und als Energiequelle für die erste Handwerkzeugmaschine 16a zu dienen, als auch an der zweiten Schnittstelle 18b anbringbar zu sein und als Energiequelle für die zweite Handwerkzeugmaschine 16b zu dienen. Das heißt, dass die wiederaufladbare Batterie 14 als Energiequelle für die Handwerkzeugmaschinen 16a bis 16j unterschiedlichen Typs dienen kann.

Wie in Figur 2 ersichtlich wird der elektronisch kommutierte Elektromotor 12a von einem ersten Gehäuseteil 30a aufgenommen. Der elektronisch kommutierte Elektromotor 12a treibt eine Abtriebswelle 32a an, die ebenfalls vom ersten Gehäuseteil 30a aufgenommen wird. Die Abtriebswelle 32a setzt sich in einer Werkzeugspindel 24a fort. Der elektronisch kommutierte Elektromotor 12a treibt die Werkzeugspindel 24a direkt an. Direkt heißt, dass der elektronisch kommutierte Elektromotor 12a mit der Werkzeugspindel 24a ohne Zwischenschaltung eines konventionellen Getriebes verbunden ist. Aufgrund dieser konstruktiven Ausgestaltung definiert die Länge des elektronisch kommutierten Elektromotors 12a maßgeblich die Länge l_{G1} des ersten Gehäuseteils 30a. Das heißt, dass durch Wegfall eines konventionellen Getriebes, Bauraum gespart werden kann. Anforderungen an Bauraum werden zumindest noch durch den Einbau von Motorenlagern 23ₐ₁, 23ₐ₂ gestellt.

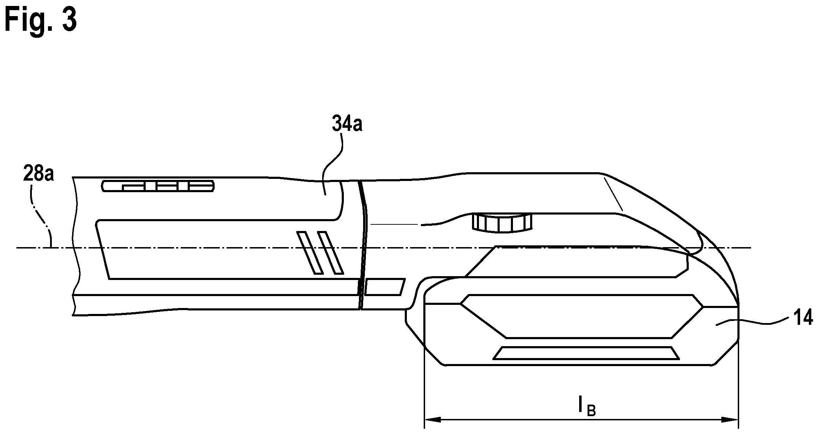

Ein Bearbeitungswerkzeug 25a ist abtriebsseitig angeordnet. Das Bearbeitungswerkzeug 25a ist im Ausführungsbeispiel in den Figuren 2 und 3 beispielsweise eine Schleif-, Schrupp- oder Trennscheibe. Der elektronisch kommutierte Elektromotor 12a bildet mit dem ersten Gehäuseteil 30a eine erste Achse 26a. Die erste Achse 26a liegt koaxial zur Abtriebswelle 32a.

Die Elektronikeinheit 20a wird von einem zweiten Gehäuseteil 34a aufgenommen. Das zweite Gehäuseteil 34a ist zwischen dem ersten Gehäuseteil 30a und wiederaufladbaren Batterie 14 angeordnet. Die beiden Gehäuseteile 30a und 34a können einstückig oder als separate Bauteileinheiten ausgeführt sein. Als separate Bauteileinheiten können die beiden Gehäuseteile verschraubt oder verschweißt oder dergleichen sein. Die beiden Gehäuseteile können gegeneinander drehbar miteinander verbunden sein. Die Elektronikeinheit 20a ist so im zweiten Gehäuseteil 34a angeordnet, dass sich die geometrische Abmessung der Elektronikeinheit 20a in x-Richtung des zweiten Gehäuseteil 34a mit einem Großteil einer Batterielänge I_{B} der wiederaufladbaren Batterie 14 in x-Richtung des zweiten Gehäuseteil 34a überschneidet. Dadurch kann maximal Bauraum gespart werden. Der Anteil des "Großteils einer Batterielänge I_{B}" ist im Ausführungsbeispiel in den Figuren 2 und 3 größer als 50% der Batterielänge I_{B}.

Zusammen mit dem zweiten Gehäuseteil 34a bildet die wiederaufladbare Batterie 14 eine zweite Achse 28a. Die zweite Achse 28a durchdringt dabei die wiederaufladbare Batterie 14 und erstreckt sich entlang des zweiten Gehäuseteils 34a in einer axialen Richtung des zweiten Gehäuseteils 34a. Die axiale Richtung ist hierbei als x-Richtung der Handwerkzeugmaschine 10a definiert.

Die beiden Achsen 26a und 28a stehen in einem Winkel a zueinander, der zwischen 60° und 120°, besonders aber zwischen 80° und 100 ° liegt. Bevorzugt beträgt der Winkel a zwischen der ersten Achse 26a und der zweiten Achse 28a aber ungefähr 90°. Die Winkelangabe berücksichtigt keine Fertigungstoleranzen.

In einer anderen vorteilhaften Ausführungsform stehen die beiden Achsen 26a und 28a in einem Winkel a zueinander, der zwischen 10° und 20°, besonders zwischen 5° und 10 ° liegt, bevorzugt aber ungefähr 0° beträgt.

In einer weiteren vorteilhaften Ausführungsform (Figur 3) ist die wiederaufladbare Batterie 14 derart am zweiten Gehäuseteil 34a angeordnet, dass ein Großteil der Batterielänge I_{B} außerhalb des zweiten Gehäuseteils 34a liegt. Die zweite Achse 28a liegt hier winklig, insbesondere rechtwinklig zur Einschubrichtung der wiederaufladbaren Batterie 14.

Das zweite Gehäuseteil 34a ist als ein Handgriff ausgebildet beziehungsweise dient als Handgriff. Unter dem Begriff "Handgriff" soll ein Bauteil verstanden werden, um das mindestens eine Hand eines Bedieners zumindest teilweise gelegt werden kann, um die Handwerkzeugmaschine 16a zu führen.

Die erste Schnittstelle 18a ist im Ausführungsbeispiel eine mechanische Schnittstelle. Die mechanische Schnittstelle stellt eine mechanisch feste, jedoch lösbare Verbindung der beiden Gehäuseteile 30a, 34a her. Das erste Gehäuseteil 30a ist mit dem zweiten Gehäuseteil 34a über die mechanische Schnittstelle 18a fest, jedoch manuell oder durch ein geeignetes Werkzeug lösbar verbunden.

Bei Betätigung des Schaltelementes 22a wird ein interner Schalter 36a betätigt, der die Elektronikeinheit 20a einschaltet. Die Elektronikeinheit 20a bestromt und/oder regelt und/oder steuert den elektronisch kommutierten Elektromotor 12a. Das Schaltelement 22a und die Elektronikeinheit 20a werden vom zweiten Gehäuseteil 34a aufgenommen. Im Ausführungsbeispiel in Figur 2 ist das Schaltelement 22a als Schaltschieber ausgeführt.

Es ist aber auch möglich, dass das Schaltelement 22a als Totmannschalter, Gasgebeschalter oder Arretierschalter ausgeführt ist.

Ein Schaltsystem kann mindestens einen Schiebeschalter, einen Totmannschalter, einen Gasgebeschalter und einen Arretierschalter umfassen.

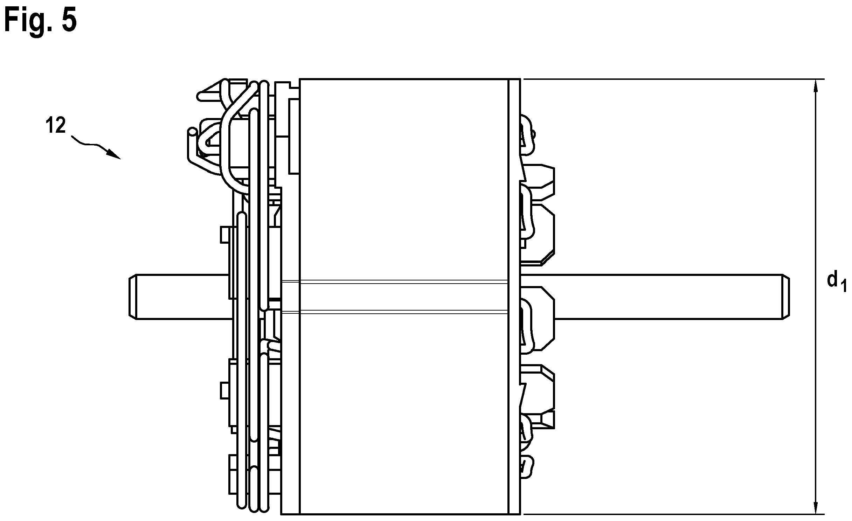

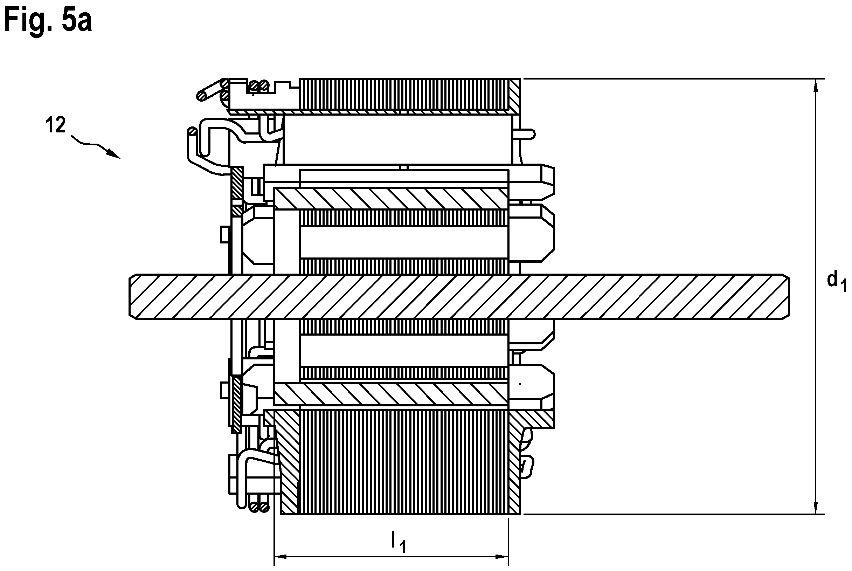

Die Figuren 5 und 5a zeigen einen elektronisch kommutierten Elektromotor 12 einer ersten Baugröße. Der elektronisch kommutierte Elektromotor 12 weist eine Länge l₁ auf, die zwischen 12 und 30 mm, besonders zwischen 15 und 25 mm, bevorzugt aber zwischen 18 und 24 mm liegt. Der elektronisch kommutierte Elektromotor 12 kann mit der Länge l₁ in den verschiedenen Handwerkzeugmaschinen 16a bis 16j eingesetzt werden. Die Werte für die Länge l₁ des elektronisch kommutierten Elektromotors 12 berücksichtigen keine im Motorfertigungsprozess auftretenden Fertigungstoleranzen.

Der elektronisch kommutierte Elektromotor 12 der ersten Baugröße weist einen Durchmesser d₁ auf, der zwischen 30 und 50 mm, besonders zwischen 35 und 44 mm liegt, bevorzugt aber 38 mm beträgt. Der elektronisch kommutierte Elektromotor 12 kann mit dem Durchmesser d₁ in den verschiedenen Handwerkzeugmaschinen 16a bis 16j eingesetzt werden. Die Werte für den Durchmesser d₁ des elektronisch kommutierten Elektromotors 12a berücksichtigen keine im Motorfertigungsprozess auftretenden Fertigungstoleranzen.

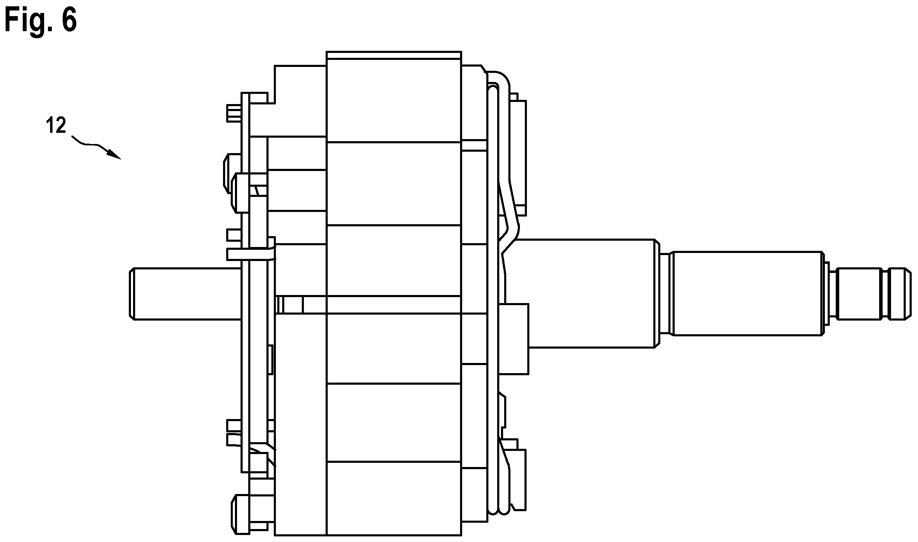

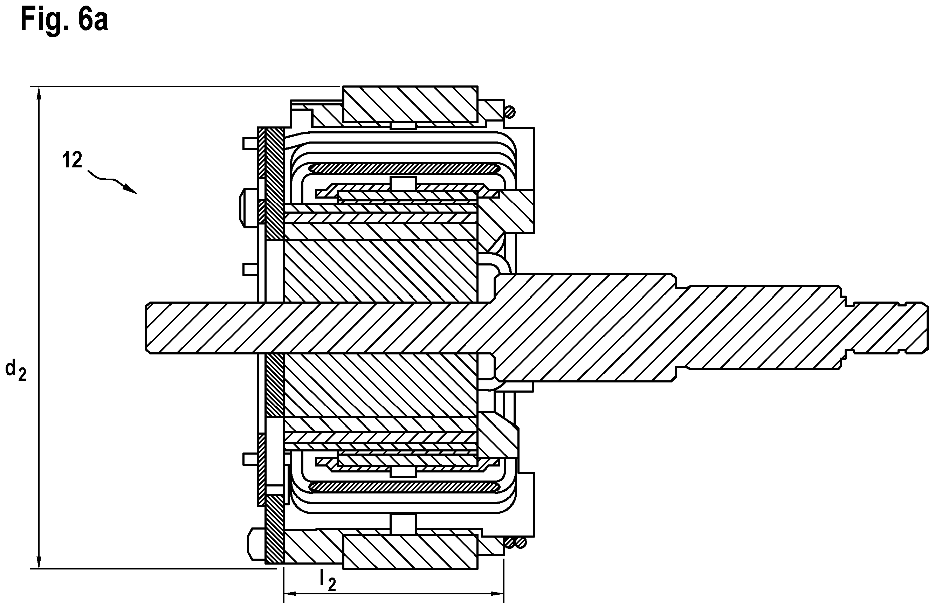

Die Figuren 6 und 6a zeigen einen elektronisch kommutierten Elektromotor 12 einer zweiten Baugröße. Der elektronisch kommutierte Elektromotor 12 weist eine Länge l₂ auf, die zwischen 10 und 30 mm, besonders zwischen 15 und 25 mm liegt, bevorzugt aber 20 mm beträgt. Der elektronisch kommutierte Elektromotor 12 kann mit der Länge l₂ in den verschiedenen Handwerkzeugmaschinen 16a bis 16j eingesetzt werden. Die Werte für die Länge l₂ des elektronisch kommutierten Elektromotors 12 berücksichtigen keine im Motorfertigungsprozess auftretenden Fertigungstoleranzen.

Der elektronisch kommutierte Elektromotor 12 der zweiten Baugröße weist einen Durchmesser d₂ auf, der zwischen 30 und 50 mm, besonders zwischen 35 und 45 mm liegt, bevorzugt aber 44 mm beträgt. Der elektronisch kommutierte Elektromotor 12 kann mit dem Durchmesser d₂ in den verschiedenen Handwerkzeugmaschinen 16a bis 16j eingesetzt werden. Die Werte für den Durchmesser d₂ des elektronisch kommutierten Elektromotors 12 berücksichtigen keine im Motorfertigungsprozess auftretenden Fertigungstoleranzen.

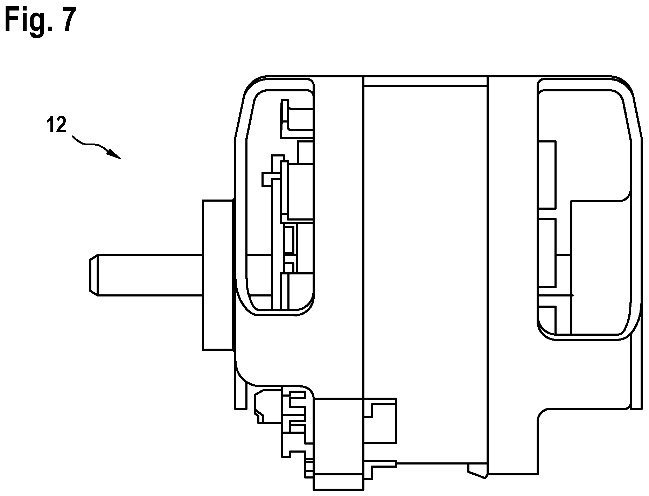

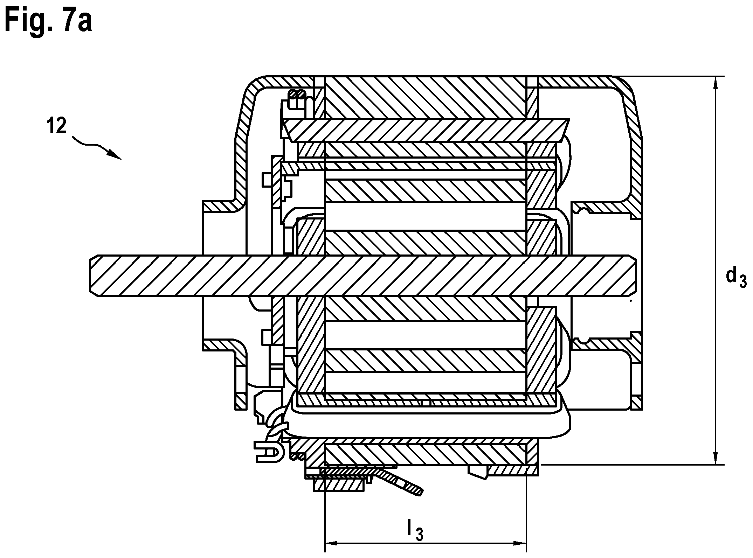

Die Figuren 7 und 7a zeigen einen elektronisch kommutierten Elektromotor 12 einer dritten Baugröße. Der elektronisch kommutierte Elektromotor 12 weist eine Länge l₃ auf, die zwischen 10 und 35 mm, besonders zwischen 15 und 30 mm liegt, bevorzugt aber 26 mm beträgt. Der elektronisch kommutierte Elektromotor 12 kann mit der Länge l₃ in den verschiedenen Handwerkzeugmaschinen 16a bis 16j eingesetzt werden. Die Werte für die Länge l₃ des elektronisch kommutierten Elektromotors 12 berücksichtigen keine im Motorfertigungsprozess auftretenden Fertigungstoleranzen.

Der elektronisch kommutierte Elektromotor 12 der dritten Baugröße weist einen Durchmesser d₃ auf, der zwischen 40 und 60 mm, besonders zwischen 45 und 55 mm liegt, bevorzugt aber 50 mm beträgt. Der elektronisch kommutierte Elektromotor 12 kann mit dem Durchmesser d₃ in den verschiedenen Handwerkzeugmaschinen 16a bis 16j eingesetzt werden. Die Werte für den Durchmesser d₃ des elektronisch kommutierten Elektromotors 12 berücksichtigen keine im Motorfertigungsprozess auftretenden Fertigungstoleranzen.

In den Figuren 5, 5a, 6, 6a, 7 und 7a sind die elektronisch kommutierten Elektromotoren als Innenläufermotoren ausgeführt. Bei Motoren dieser Art befindet sich ein Stator, der die stromführenden Wicklungen trägt, am Motorgehäuse. Ein Rotor, der die Permanentmagnete trägt, ist mit der Abtriebswelle verbunden. Die Vorteile des Innenläufermotors sind eine hohe zu erreichende Drehzahl bei hoher Leistungsdichte.

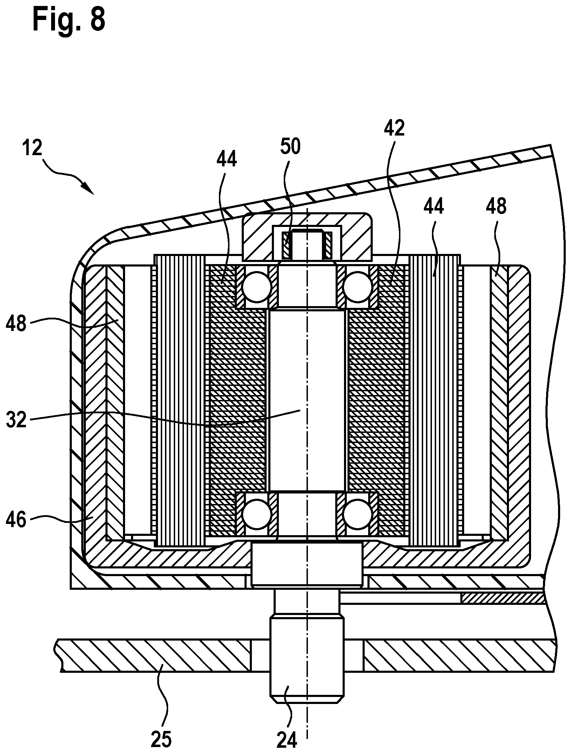

Figur 8 zeigt einen Schnitt durch einen Außenläufermotor. Bei Motoren dieser Art wird der Stator 42, der die Wicklungen 44 trägt vom Rotor 46 umschlossen. Das Magnetfeld wird durch Permanentmagnete 48 erzeugt, die im Rotor 46 angeordnet sind. Der Rotor 46 ist üblicherweise an der Abtriebswelle 32 befestigt, während der Stator 42 auf einem Statorträger angeordnet ist. Mögliche Vorteile dieser Motoren sind die zu erreichenden hohen Drehmomente. Der Außenläufermotor 12 kann die Längen l₁ bis l₃ aufweisen. Der Außenläufemotor 12 kann die Durchmesser d₁ bis d₃ aufweisen.

Für eine erforderliche Kommutierung wird die Winkelstellung des Permanentmagneten 48 im Rotor 46 über einen oder mehrere Sensoren 50 erfasst und von der Elektronikeinheit ausgewertet. Anhand der Winkelstellung des Rotors 46 und der gewünschten Drehrichtung werden von der Elektronikeinheit die entsprechenden Wicklungen 44 bestromt, um das erforderliche Drehmoment zu erzeugen. Es ist aber auch denkbar, dass die Kommutierung sensorlos durch die Erfassung einer in den Windungen des Stators ausgelöste Gegenspannung, erfolgt.

Des Weiteren kann eine Sensorvorrichtung dazu vorgesehen sein, einen Kickback und/oder eine Fehlmontage des Bearbeitungswerkzeugs und/oder ein Bersten des Bearbeitungswerkzeugs im Betrieb der Handwerkzeugmaschine 16a bis 16j und/oder einen Fall Handwerkzeugmaschine 16a bis 16j zu detektieren.

Da bei Handwerkzeugmaschinen 10a bis 10j mit elektronisch kommutierten Elektromotoren 12a bis 12j die Elektronikeinheiten 20a bis 20j immer leistungsfähiger und von Größe und Volumen größer ausgelegt sind als bei Bürstenmotoren, spielt die Kühlung eine immer wichtigere Rolle und hat die Notwendigkeit einer optimalen Kühlung zur Folge. Die Kühlung kann passiv oder aktiv ausgeführt sein. Bei der passiven Kühlung erfolgt der Abtransport der thermischen Energie durch Konvektion. Bei aktiver Kühlung wird die thermische Energie der zu kühlenden Komponente mit Hilfe eines Kühlsystems abtransportiert.

Im Ausführungsbeispiel in Figur 2 ist das Kühlsystem ein Lüfter 52a. Der Lüfter 52a ist auf der Abtriebswelle 32a angebracht und zwischen dem elektronisch kommutierten Elektromotor 12a und dem Bearbeitungswerkzeug 25a angeordnet. Es ist aber auch denkbar, dass der Lüfter 52a nicht an der Abtriebswelle 32a angebracht ist, sondern über Elemente wie Riemen oder Zahnräder mit der Abtriebswelle 32a verbunden ist. Genauso gut ist es denkbar, dass andere Kühlsysteme wie Peltierelemente, Kühlkörper, zusätzliche Aktoren mit Luftführungselementen oder dergleichen zum Einsatz kommen.

Die Elektronikeinheit 20a ist mit dem elektronisch kommutierten Elektromotor 12a verbunden. Die Elektronikeinheit 20a überwacht mindestens einen den elektronisch kommutierten Elektromotor 12a betreffenden Parameter. Unter dem den elektronisch kommutierten Elektromotor 12a betreffenden Parameter soll mindestens einer der folgenden Parameter des elektronisch kommutierten Elektromotors 12a verstanden werden: ein Lastmoment, ein Überlastmoment, eine Drehzahl, ein Strom, eine Ankerspannung und/oder eine Temperatur des elektronisch kommutierten Elektromotors 12a. Das Lastmoment beschreibt ein Moment, das durch ein Werkstück als Gegenmoment zu einem Antriebsmoment erzeugt wird. Ein Ansteigen des Lastmoments im laufenden Betrieb führt zu einem Absinken der Drehzahl. Ein Absinken der Drehzahl erhöht den durch den elektronisch kommutierten Elektromotor 12a aufgenommenen Strom und/oder die Spannung und verringert dabei die Kühlwirkung des Lüfters 52a, sodass die Temperatur, gemessen im elektronisch kommutierten Elektromotor 12a, steigt. Demzufolge kann mindestens einer der folgenden Parameter überwacht werden: ein Überschreiten des Überlastmomentes, ein Unterschreiten eines Grenzwertes der Drehzahl, ein Überschreiten eines Grenzwertes des Stroms, ein Überschreiten eines Grenzwertes der Ankerspannung und/oder einer Überschreitung eines Grenzwertes der Temperatur. Es können ein oder mehrere Parameter parallel überwacht werden. Unter dem Überlastmoment soll das Moment verstanden werden, bei dessen Überschreitung die Temperaturerhöhung kritisch für die Komponenten des elektronisch kommutierten Elektromotors 12a wird, d.h. dass eine Zerstörung des elektronisch kommutierten Elektromotors 12a nicht mehr ausgeschlossen werden kann. Die Elektronikeinheit 20a errechnet mittels eines Sollwert- Istwert-Vergleichs mindestens eines Wertes des Parameters mindestens ein Ansteuersignal für den elektronisch kommutierten Elektromotor 12a.

Des Weiteren ist die Elektronikeinheit 20a mit dem internen Schalter 36a verbunden. Dabei überwacht die Elektronikeinheit 20a mindestens einen den internen Schalter 36a betreffenden Parameter. Unter dem Parameter soll mindestens der folgende Parameter verstanden werden: ein Kurzschlusstrom, der über einen Schaltkontakt 37a fließt. Der Schaltkontakt 37a befindet sich zwischen dem internen Schalter 36a und der Elektronikeinheit 20a.

Die Elektronikeinheit 20a errechnet mittels eines Sollwert- Istwert-Vergleichs mindestens eines Wertes des Parameters mindestens ein Ansteuersignal für den elektronisch kommutierten Elektromotor 12a.

Des Weiteren ist die Elektronikeinheit 20a mit der wiederaufladbaren Batterie 14 verbunden. Die Elektronikeinheit 20a überwacht mindestens einen die wiederaufladbare Batterie 14 betreffenden Parameter. Unter dem Parameter soll mindestens einer der folgenden Parameter der wiederaufladbaren Batterie 14 verstanden werden: eine Kapazität der wiederaufladbaren Batterie 14 und/oder ein Überlastzustand der wiederaufladbaren Batterie 14.

Die Elektronikeinheit 20a errechnet mittels eines Sollwert- Istwert-Vergleichs des Wertes des Parameters mindestens ein Ansteuersignal für den elektronisch kommutierten Elektromotor 12a.

Die Batteriespannung liegt in einem Bereich zwischen 3,6 und 42V, besonders zwischen 7,2 und 14,4 V, beträgt bevorzugt aber 10,8V. Die Batteriespannungswerte sind hierbei Nennpannungswerte der Batteriespannung und berücksichtigen nicht mögliche Batteriespannungsschwankungen. Die Nennspannung einer Batterie ergibt sich aus der Anzahl der in Reihe geschalteten Zellen. Die Die Nennspannung der wiederaufladbaren Batterie 14 ist ungleich der Leerlaufspannung der wiederaufladbaren Batterie 14.

Die wiederaufladbare Batterie 14 besteht insbesondere aus Lithium Ionen Batteriezellen. Die wiederaufladbare Batterie 14 umfasst dabei eine oder mehrere Reihen von Batteriezellen, die wiederum parallel zueinander geschaltet sind. Jede einzelne Zelle weist eine Länge von ungefähr 65 mm und einen Durchmesser von ungefähr 18 mm auf. Es ist aber auch denkbar, dass eine Zelle eine Länge von 65 bis 70 mm und einen Durchmesser von 14 bis ungefähr 20 mm aufweist. Diese Angaben berücksichtigen keine möglichen Fertigungstoleranzen. Lithium Ionen Akkus zeichnen sich durch eine hohe Energiedichte und eine thermische Stabilität auch bei hohen Belastungen aus, was eine hohe Leistung bedeutet. Ein weiterer großer Vorteil ist die geringe Selbstentladung, die bewirkt, dass auch die Akkus auch bei längeren Standzeiten einsatzbereit sind. Aus diesen Vorteilen ergeben sich die Vorteile der erfindungsgemäßen Handwerkzeugmaschinen 16a bis 16j, insbesondere die Kompaktheit der Handwerkzeugmaschinen 16a bis 16j verbunden mit einer hohen Leistungsfähigkeit.

Es ist aber auch denkbar, dass die wiederaufladbare Batterie 14 aus Lithium-Luft-Zellen, aus Lithium-Schwefel-Zellen, Lithium-Polymer-Zellen oder dergleichen besteht. Des Weiteren kann die wiederaufladbare Batterie 14 in einer anderen als der gezeigten geometrischen Ausführung realisiert sein, wie zum Beispiel einer eckigen Ausführung.

In einem Ausführungsbeispiel ist die Handwerkzeugmaschine 16a bis 16j sowohl in einem Ecomodus, als auch in einem Boostmodus betreibbar.

Im Ecomodus wird der elektronisch kommutierte Elektromotor 12a bis 12j der Handwerkzeugmaschinen 16a bis 16j im optimalen Arbeitspunkt betrieben.

Im Boostmodus arbeitet der elektronisch kommutierte Elektromotor 12a bis 12j besonders leistungsfähig. Im Boostmodus liegt die Leistungsüberhöhung des elektronisch kommutierten Elektromotors 12 a bis 12j zwischen 10% und 100%, besonders zwischen 20% und 50% , bevorzugt aber bei 33% der Nennleistung. Die zeitliche Begrenzung des Boostmodus liegt zwischen 0 und 5min, besonders zwischen 0 und 2,5min. Bevorzugt liegt die zeitliche Begrenzung des Boostmodus zwischen 30s und 1min.

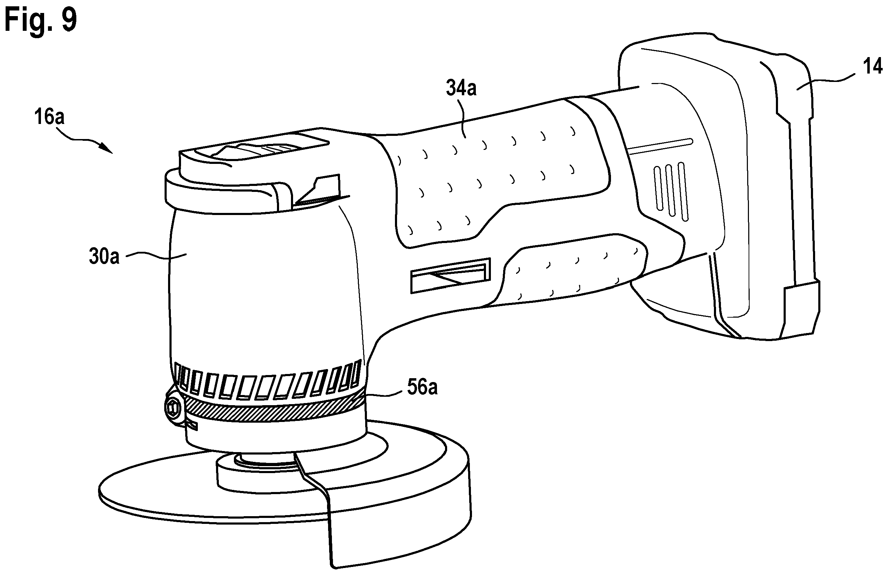

In Figur 9 ist eine zweite Ausführungsform der ersten Handwerkzeugmaschine 16a dargestellt. Am ersten Gehäuseteil 30a der Handwerkzeugmaschine 16a ist eine Beleuchtungsvorrichtung 56a angeordnet. Die Beleuchtungsvorrichtung 56a kann aber auch am zweiten Gehäuseteil 34a angeordnet sein. Die Beleuchtungsvorrichtung 56a kann ein Arbeitsfeld ausleuchten, aber auch optische Informationen auf ein Werkstück und/oder eine Umgebung projizieren. Die Beleuchtungsvorrichtung 56a kann sowohl aus einzelnen Beleuchtungsmitteln als auch aus mehreren Beleuchtungsmitteln bestehen und beispielsweise eine einzelne LED, als auch mehrere LEDs aufweisen. Die Beleuchtungsmittel können in verschiedenen Bauformen und Größen vorgesehen sein. Die Beleuchtungsvorrichtung 56a kann aber auch als punktförmige Lichtquelle ausgeführt sein. Es ist aber auch denkbar, dass die Beleuchtungsvorrichtung 56a als Projektionsvorrichtung ausgeführt ist. Die Beleuchtungsvorrichtung 56a kann Beleuchtungselemente aufweisen, die verschiedengestaltig am ersten Gehäuseteil 30a und/oder am zweiten Gehäuseteil 34a angeordnet sein können.

Die Beleuchtungsvorrichtung 56a kann als geschlossener Leuchtring ausgebildet sein. Das ausgesendete Licht kann unterschiedliche Farben aufweisen. Das vom Leuchtring ausgesendete Licht kann in der Helligkeit variieren. Das vom Leuchtring ausgesendete Licht kann ein Blinklicht sein, das periodisch die Helligkeit ändert. Der Leuchtring kann mit dem ersten Gehäuseteil 30a und/oder dem zweiten Gehäuseteil 34a durch Kleben, Rasten, Klemmen, Clipsen oder dergleichen verbunden sein.

Die Beleuchtungsvorrichtung 56a kann als Lauflicht ausgebildet sein. Das vom Lauflicht ausgesendete Licht kann unterschiedliche Farben aufweisen. Das vom Lauflicht ausgesendete Licht kann in der Helligkeit variieren. Das Lauflicht kann mit dem ersten Gehäuseteil 30a und/oder dem zweiten Gehäuseteil 34a durch Kleben, Rasten, Klemmen, Clipsen oder dergleichen verbunden sein.

Des Weiteren ist die Beleuchtungsvorrichtung 56a in der Figur 9 dazu vorgesehen, dem Bediener der Handwerkzeugmaschine 16a eine die Parameter der Handwerkzeugmaschine 16a betreffende Anzeige bereitzustellen. Die zur Handwerkzeugmaschine 16a zugehörigen Parameters sind mindestens folgende:
- Eine Kapazität der wiederaufladbaren Batterie 14
- Ein Überlastzustand der Handwerkzeugmaschine 16a, insbesondere des elektronisch kommutierten Elektromotors 12a, der Elektronik 20a und/oder der wiederaufladbaren Batterie 14
- Eine Drehzahl des elektronisch kommutierten Elektromotors 12a
- Ein Strom, eine Spannung und/oder eine Temperatur des elektronisch kommutierten Elektromotors 12a
- Eine Temperatur des elektronisch kommutierten Elektromotors 12a und/oder der Elektronik 20a

Die Anzeige der Parameter der Handwerkzeugmaschine 16a kann beispielsweise durch folgende Anzeigemöglichkeiten realisiert werden:
- Eine Änderung der Lichtfarbe
- Eine Änderung der Lichtintensität
- Lichtpulse unterschiedlicher Länge
- Lichtpulse unterschiedlicher Helligkeit
- Lauflicht mit Änderung der Laufrichtung des Lichts
- Lichtpulse, variierend in Pulsfrequenz und/oder Helligkeit

Des Weiteren sind weitere dem Fachmann als sinnvoll erscheinende Anzeigen der Parameter der Handwerkzeugmaschine 16a möglich.

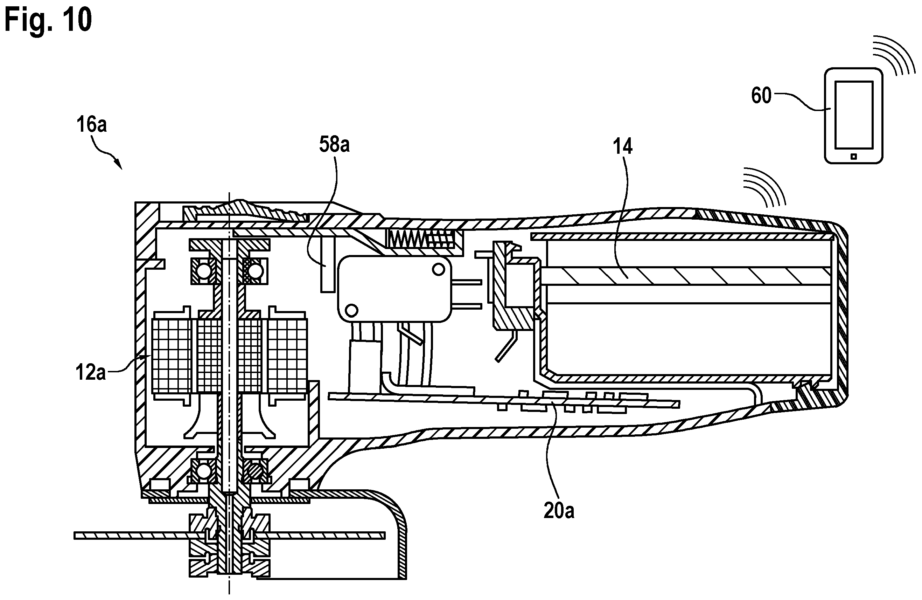

Figur 10 zeigt eine weitere Ausführungsform der Handwerkzeugmaschine 16a. Die Handwerkzeugmaschine 16a ist mit einer Schnittstelle 58a ausgestattet, die dazu vorgesehen ist, einen Datenaustausch, insbesondere einen elektronischen Datenaustausch zwischen der Handwerkzeugmaschine 16a, insbesondere der Elektronik 20a der Handwerkzeugmaschine 16a und einer externen Kommunikations- und/oder Datenverarbeitungseinheit 60 zu ermöglichen. Der Datenaustausch zwischen der Elektronik 20a und der externen Kommunikations- und/oder Datenverarbeitungseinheit 60 erfolgt bevorzugt kabellos, beispielsweise mit Hilfe einer Bluetoothverbindung, Bluetooth Low Energy, einer WLAN-Verbindung, einer NFC-Verbindung, einer Infrarotverbindung oder dergleichen. Die Elektronik 20a steuert und/oder regelt den elektronisch kommutierten Elektromotor 12a bevorzugt in Abhängigkeit der Parameter der Handwerkzeugmaschine 16a.

Die externe Kommunikations- und/oder Datenverarbeitungseinheit 60 ist vorzugsweise als Smart Interface, beispielsweise als Smartphone ausgebildet, das eine App zu einer Kommunikation mit der Schnittstelle 58a aufweist. Es ist jedoch auch denkbar, dass die externe Kommunikations- und/oder Datenverarbeitungseinheit 60 als externe, transportable Kommunikations- und/oder Datenverarbeitungseinheit, als fest installierte Kommunikations- und/oder Datenverarbeitungseinheit oder als weitere, einem Fachmann als sinnvoll erscheinende zentrale oder dezentrale Kommunikations- und/oder Datenverarbeitungseinheit ausgebildet ist. Es kann somit vorteilhaft eine Synchronisation von elektronischen Daten ermöglicht werden. In der externen Kommunikations- und/oder Datenverarbeitungseinheit 60 hinterlegte Einstellungen können beispielsweise direkt auf die Handwerkzeugmaschine 16a übertragen werden, wie beispielsweise eine eingestellte Drehzahl, eine maximale Leistung oder dergleichen.

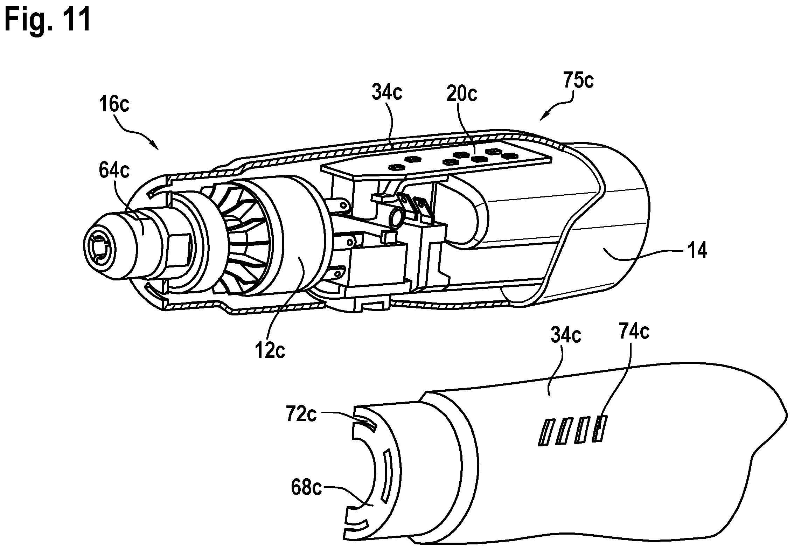

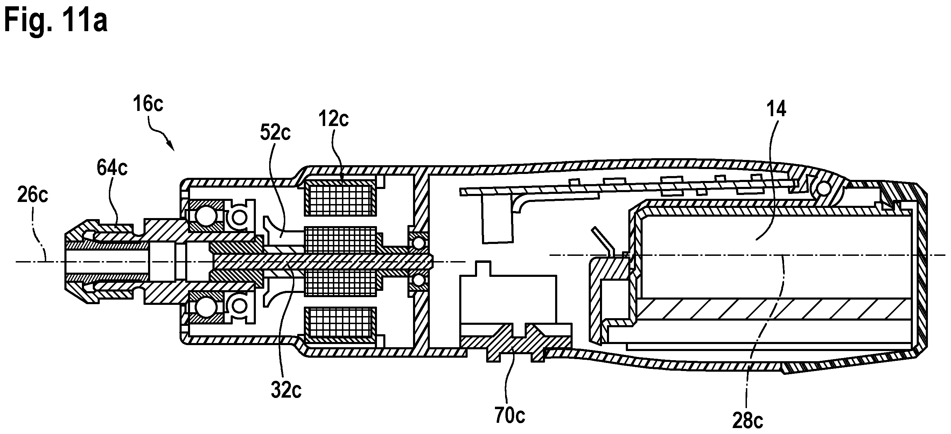

In Figur 11 ist die Handwerkzeugmaschine 16c als Geradschleifer 16c ausgebildet. Ein zweites Gehäuseteil 34c ist als Handgriff ausgebildet. In einer weiteren Ausführungsform kann das Gehäuseteil 34c auch als Topfgehäuse ausgebildet sein. Es ist aber auch denkbar, dass das erste Gehäuse 34c aus einem weiteren Gehäuseteil, beispielsweise aus einem Deckel besteht.

Im Gehäuseteil 34c ist der elektronisch kommutierten Elektromotor 12c angeordnet. Der elektronisch kommutierten Elektromotor 12 ist zwischen einer wiederaufladbaren Batterie 14 und einer Werkzeugaufnahme 64c angeordnet. Der elektronisch kommutierten Elektromotor 12c kann über eine Bremse, insbesondere über eine elektronische Bremse, aktiv abgebremst werden. Die Elektronik 14c ist ebenfalls im Gehäuseteil 34c angeordnet. Die Elektronik 20c bestromt den elektronisch kommutierten Elektromotor 12c. Die wiederaufladbare Batterie 14 dient als Energiequelle für den elektronisch kommutierten Elektromotor 12c. Der elektronisch kommutierten Elektromotor 12c treibt eine Werkzeugspindel an. Die Werkzeugaufnahme 64c dient dazu, ein nicht näher dargestelltes Bearbeitungswerkzeug für den Geradschleifer 16c aufzunehmen. Die Werkzeugaufnahme 24c ist als Spannzange ausgebildet. Das Bearbeitungswerkzeug kann ein nicht näher dargestellter Fräs-, Polier-, Schleifkörper oder dergleichen sein.

Die Werkzeugaufnahme 64c weist einen Durchmesser d auf, der zwischen 4,0 und 8,0 mm liegt. Bevorzugt beträgt der Durchmesser d 6,0 mm beträgt. Diese Angabe berücksichtigt keine Fertigungstoleranzen.

In Figur 11a ist der Geradschleifer 16c in Teilansicht schematisch dargestellt.

Wie in Figur 11a ersichtlich, ist der elektronisch kommutierte Elektromotor 12c ein Innenläufermotor. Der elektronisch kommutierte Elektromotor 12c kann der elektronisch kommutierte Elektromotor sein, der in Figur 5 gezeigt ist.

Über ein Stellelement 70c wird die Drehzahl, die an der Werkzeugspindel gemessen werden kann, gestellt. Im Ausführungsbeispiel beträgt die Nenndrehzahl an der Werkzeugspindel mindestens 15 000 min⁻¹. Die Drehzahl kann bis 50 000 min⁻¹ erhöht werden.

Ein Lüfter 52c ist im zweiten Gehäuseteil 34c integriert. Besonders vorteilhaft ist es, wenn der Lüfter 52c zwischen dem elektronisch kommutierten Elektromotor 12 und der Werkzeugaufnahme 64c integriert. Der Lüfter 52c kann aber auch zwischen dem elektronisch kommutierten Elektromotor 12 und der Elektronik 20c angeordnet sein. Genauso gut ist es denkbar, auf den Lüfter 52c zu verzichten und die Kühlung zum Beispiel über intelligent angeordnete Kühlrippen und/oder Kühlkörper zu realisieren.

Wie in Figur 11 ersichtlich, sind in einer ringscheibenförmigen Gehäusewand 68c vier Luftaustrittsöffnungen 72c eingebracht. Genauso gut ist es denkbar, dass weniger oder mehr als vier Luftaustrittsöffnungen 72c in der ringscheibenförmigen Gehäusewand 68c eingebracht sind.

In das zweite Gehäuseteil 34c sind Lufteintrittsöffnungen 74c eingebracht. Ein Kühlstrom wird vom Lüfter 52c erzeugt und verläuft von den Lufteintrittsöffnungen 74c zu den Luftaustrittsöffnungen 72c.

Im Ausführungsbeispiel ist an einer, der Werkzeugaufnahme 64c abgewandten hinteren Seite 75c des Geradschleifers 16c, die wiederaufladbare Batterie 14 angeschlossen. Die Batteriespannung liegt in einem Bereich zwischen 3,6 und 42V, besonders zwischen 7,2 und 14,4 V, beträgt bevorzugt aber 10,8V. Die Werte der Batteriespannung berücksichtigen nicht mögliche Batteriespannungsschwankungen. Die wiederaufladbare Batterie 14 ist hierbei mit dem Geradschleifer 10c derart verbunden, dass ein großer Teil der wiederaufladbaren Batterie 14 im Gehäuse inneren des Geradschleifers 16c liegt und somit zu einer kompakten Bauweise beiträgt.

Weiterhin ist es möglich, durch Betätigung eines Schaltelements eine Blockiervorrichtung zu aktivieren, um eine Werkzeugspindel zu arretieren. Die Blockiervorrichtung kann als Schieber, Stift oder Hebel ausgeführt sein. Die Spindelarretierung kann form- und /oder kraftschlüssig erfolgen. Dabei ist es denkbar, dass auf der Abtriebswelle 32c Elemente, wie beispielsweise Rast- oder Reibscheiben aufgebracht sind. Die Blockiervorrichtung kann als separates Bauteil ausgeführt sein. Es ist aber auch denkbar, dass die Blockiervorrichtung in ein bestehendes Bauteil integriert ist oder mit diesem kombiniert ist. Ein solches Bauteil kann ein Schaltelement, ein Stellelement oder dergleichen sein. Die Spindelarretierung kann automatisch erfolgen. Es ist aber auch vorstellbar, dass die Spindelarretierung manuell zu betätigen ist.

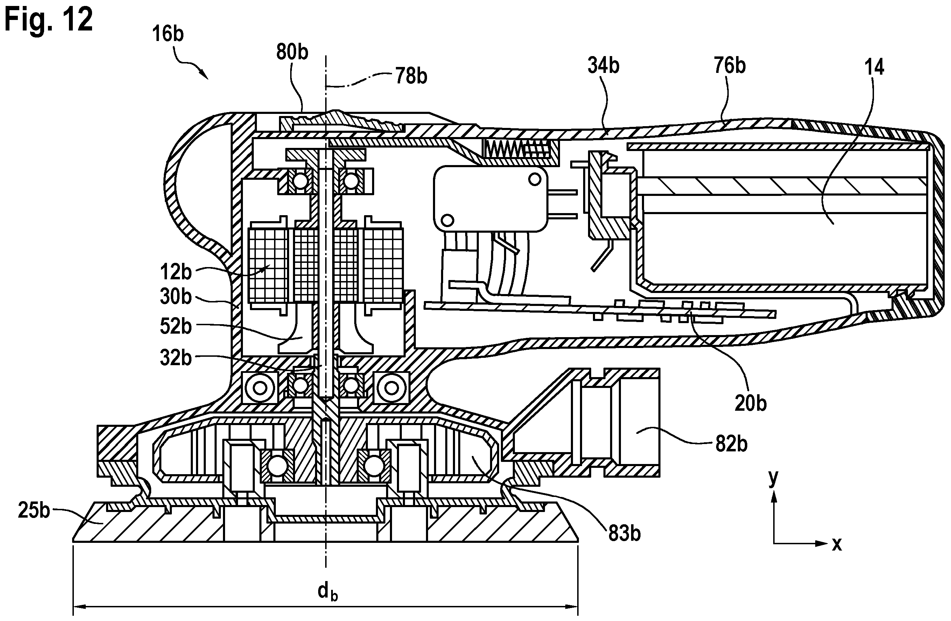

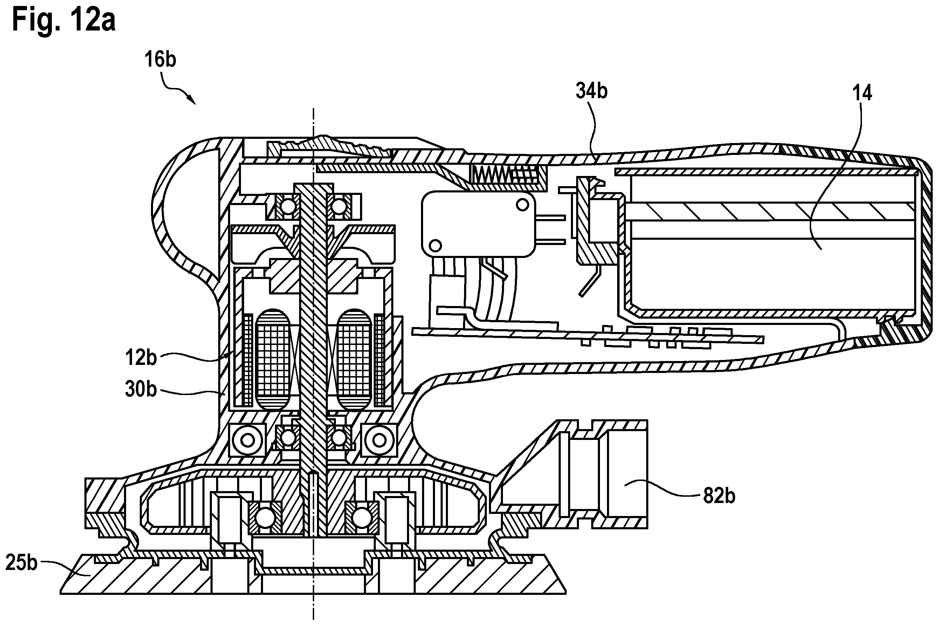

In Figur 12 ist die als Exzenterschleifer 16b ausgebildeter zweiter Handwerkzeugmaschine 16b in schematischer Darstellung gezeigt. Im ersten Gehäuseteil 30b ist der elektronisch kommutierte Elektromotor 12b angeordnet. Der elektronisch kommutierte Elektromotor 12b ist mit der Abtriebswelle 32b verbunden. Die Abtriebswelle 32b ist über ein exzentrisch angeordnetes Lager mit einer Tragwelle verbunden, die das Bearbeitungswerkzeug 25b trägt. Das Bearbeitungswerkzeug 25b der Handwerkzeugmaschine 16b ist im Ausführungsbeispiel ein Schleifteller, an dessen Unterseite ein Schleifmittel zur Oberflächenbearbeitung eines Werkstücks befestigbar ist. Das Bearbeitungswerkzeug 25b der Handwerkzeugmaschine 16b weist einen Durchmesser d_{b} auf, der zwischen 75 und 150 mm, bevorzugt aber zwischen 115 und 125 mm liegt. Das Lager kann als Kugellager ausgeführt sein und ermöglicht eine Eigendrehung der Tragwelle um eine Drehachse, die zugleich die Rotationsachse des Bearbeitungswerkzeugs 25b darstellt. Die Rotationsachse der Tragwelle liegt in einem exzentrischen Abstand parallel zu einer Drehachse 78b der Abtriebswelle 32b.

Das zweite Gehäuseteil 34b ist als ein Handgriff 76b ausgebildet beziehungsweise dient einem Bediener der en Handwerkzeugmaschine 16b als Handgriff. Das erste Gehäuseteil 30b und der Handgriff 76b sind winklig zueinander angeordnet. Bevorzugt stehen erste Gehäuseteil 30b und der Handgriff 76b in einem Winkel von ungefähr 90° zueinander. Die Winkelangabe berücksichtigt keine Fertigungstoleranzen.

Im zweiten Gehäuseteil 34b ist die Elektronik 20b angeordnet. Die Elektronik 20b ist dazu vorgesehen, den elektronisch kommutierten Elektromotor 12b zu bestromen. Im Ausführungsbeispiel ist die Elektronik 20b im zweiten Gehäuseteil 34b angeordnet. Es ist aber auch denkbar, dass die Elektronik 20b beispielsweise im elektronisch kommutierten Elektromotor 12b integriert oder separat ausgeführt ist.

Um eine besonders handliche Führung der Handwerkzeugmaschine 16b zu erreichen, ist es von Vorteil, am ersten Gehäuseteil 30b einen zweiten Griffbereich 80b anzuordnen. Der zweite Griffbereich 80b ist insbesondere als Knauf ausgebildet, was auch in optischer Hinsicht ein ansprechendes Erscheinungsbild ergibt. Der zweite Griffbereich 80b ist derart ausgestaltet, dass er besonders ergonomisch in der Hand des Bedieners liegt.

Der elektronisch kommutierte Elektromotor 12b treibt die Tragwelle insbesondere direkt an. Unter "direkt" soll verstanden werden, dass der elektronisch kommutierte Elektromotor 12b mit der Tragwelle ohne Zwischenschaltung eines konventionellen Getriebes, wie beispielsweise ein Planetengetriebe, Kegelgetriebe oder Stirnrad verbunden ist.

Das exzentrisch angeordnete Bearbeitungswerkzeug 25b der Handwerkzeugmaschine 16b führt eine schwingende Bewegung aus. Der dabei entstehende Hub ist hierbei doppelt so groß wie der exzentrische Abstand zwischen der Rotationsachse der Tragwelle und der Achse 78b.

Wie in Figur 12 ersichtlich, ist der elektronisch kommutierte Elektromotor 12b ein Innenläufermotor. Der elektronisch kommutierte Elektromotor 12b kann der elektronisch kommutierte Elektromotor sein, der in Figur 5 gezeigt ist.

Eine weitere Ausführungsform der Handwerkzeugmaschine 16b ist in Figur 12a dargestellt. Wie in Figur 12a ersichtlich, ist der elektronisch kommutierte Elektromotor 12b ein Außenläufermotor.

In den Ausführungsbeispielen beträgt die Drehzahl zwischen 3.000min-1 bis 15.000 min-1, insbesondere bevorzugt 8.000rpm bis 11.000rpm. Desweitern kann die Drehzahl über ein Stellelement reduziert werden.

Der Lüfter 52b ist im ersten Gehäuseteil 30b integriert. Im Ausführungsbeispiel in Figur 12 ist der Lüfter 52b zwischen dem elektronisch kommutierten Elektromotor 12 und dem Bearbeitungswerkzeug 25b integriert. Es ist aber auch denkbar, dass andere Kühlsysteme wie Peltierelemente, geschlossene Kühlkreisläufe oder dergleichen zum Einsatz kommen. Genauso gut ist es denkbar, auf den Lüfter zu verzichten und die Kühlung zum Beispiel über intelligent angeordnete Kühlrippen und/oder Kühlkörper zu realisieren.

Eine Staubabsaugvorrichtung 82b ist am ersten Gehäuseteil 30b befestigt. Im Bearbeitungswerkzeug 25b sind über den Umfang verteilt Bohrungen eingebracht, über die bei der Bearbeitung des Werkstückes anfallender Schleifstaub mithilfe eines Staublüfters 83b in das erste Gehäuseteil 30b eingesaugt wird, wobei der Staublüfter 83b fest mit der Abtriebswelle 32b verbunden ist. Der durch die Bohrungen des Bearbeitungswerkzeugs 25b transportierte Schleifstaub wird über die Staubabsaugvorrichtung 82b in einen nicht dargestellten Staubfangbehälter geleitet.

Die Batteriespannung liegt in einem Bereich zwischen 3,6 und 42V, insbesondere zwischen 7,2 und 14,4 V, beträgt bevorzugt aber 10,8V. Die Werte der Batteriespannung berücksichtigen nicht mögliche Batteriespannungsschwankungen.

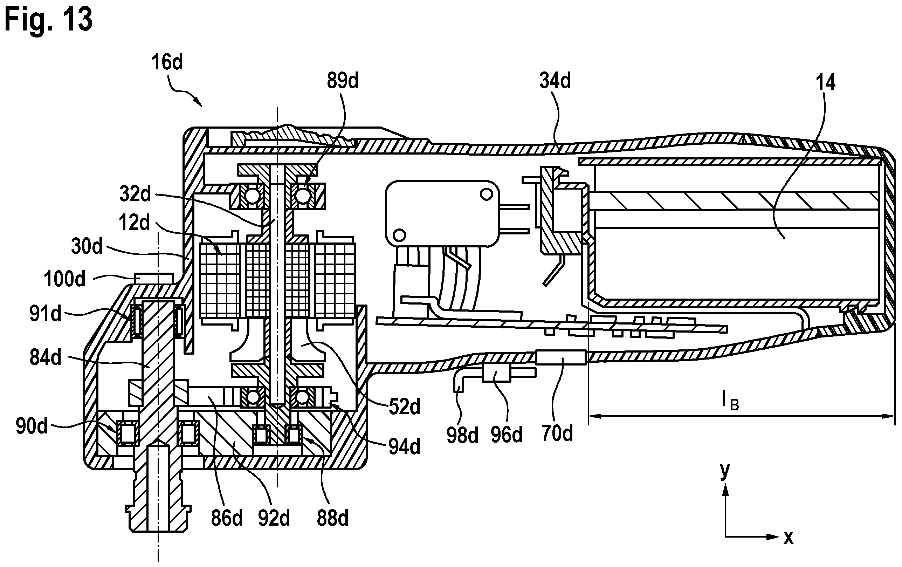

In Figur 13 ist die Handwerkzeugmaschine 16d als oszillierendes Multitool 16d ausgebildet.

Im ersten Gehäuseteil 30d ist ein elektronisch kommutierte Elektromotor 12d angeordnet, der die Abtriebswelle 32d antreibt. Eine Werkzeugwelle 84d trägt ein nicht näher dargestelltes oszillierend anzutreibendes Werkzeug. Das zweite Gehäuseteil 34d schließt sich an das erste Gehäuseteil 32d an. Das erste Gehäuseteil 32d und das zweite Gehäuseteil 34d können einstückig oder als separate Bauteileinheiten ausgeführt sein.

Das zweite Gehäuseteil 34d dient einem Benutzer der Handwerkzeugmaschine 16d als Handgriff oder ist als Handgriff ausgebildet. Das zweite Gehäuseteil 34d ist außerdem zum Einschub der wiederaufladbaren Batterie 14 vorgesehen.

Im Ausführungsbeispiel in Figur 13 ist der elektronisch kommutierte Elektromotor 12d ein Innenläufermotor. Der elektronisch kommutierte Elektromotor 12 kann der elektronisch kommutierte Elektromotor sein, der in Figur 5 gezeigt ist.

Die Abtriebswelle 32d und die Werkzeugwelle 84d sind parallel zueinander angeordnet. Die Abtriebswelle 32d und die Werkzeugwelle 84d können aber auch in einem Winkel zueinander angeordnet sein, der zwischen -30 und 30°, besonders zwischen -10 und 10°, bevorzugt aber zwischen -3,0 und 3,0° liegt. Die Winkelangabe berücksichtigt keine möglichen Toleranzen in der Winkelangabe.

Die Drehbewegung der Abtriebswelle 32d wird über ein Koppel-/Verbindungselement 86d auf die Werkzeugwelle 84d übertragen. Das Koppel-/Verbindungselement 86d ist zwischen der Abtriebswelle 32d und der Werkzeugwelle 84d angeordnet. Mit Hilfe des Koppel-/Verbindungselement 86d wird die rotierende Bewegung der Abtriebswelle 32d in eine oszillierende Pendelbewegung der Werkzeugwelle 84d übertragen.

Die oszillierende Pendelbewegung liegt in einem Winkelbereich zwischen 0,4 und 2,5°, besonders zwischen 0,8 und 1,6°, bevorzugt aber zwischen 1 und 1,4°. Es werden bis zu 30000 Pendelbewegungen in einer Sekunde ausgeführt, besonders aber 25000 Pendelbewegungen in einer Sekunde, bevorzugt aber bis zu 20000 Pendelbewegungen in einer Sekunde.

Wie aus Figur 13 ersichtlich, wird die Abtriebswelle 32d an ihrer dem Werkzeug zugewandten Stirnseite in einem ersten Lager 88d drehbar aufgenommen und auf ihrer dem Werkzeug abgewandten Seite in einem zweiten Lager 89d drehbar aufgenommen. Die Werkzeugwelle 84d ist an ihrer dem Werkzeug zugewandten Stirnseite in einem dritten Lager 90d drehbar aufgenommen und auf ihrer dem Werkzeug abgewandten Seite in einem vierten Lager 91d drehbar aufgenommen.

Die beiden Lager 88d, 90d sind insbesondere über eine Lagerplatte 92d miteinander verbunden. Die Lagerplatte 92d ist dabei als separates Bauteil gegenüber dem ersten Gehäuseteil 30d ausgeführt. Die Lagerplatte 92d ist aus einem Metall- oder einem Verbundwerkstoff aufgebaut, womit die Festigkeit erhöht werden kann.

Die vier Lager 88d, 89d, 90d, 91d können als Fest- oder Loslager ausgeführt sein.

Der Lüfter 52d ist im ersten Gehäuseteil 30d angeordnet. Der Lüfter 52d ist auf der Abtriebswelle 32d angebracht und zwischen dem elektronisch kommutierten Elektromotor 12d und dem Exzenterelement 94d angeordnet. Es ist aber auch denkbar, dass der Lüfter 52d nicht an der Abtriebswelle 32d angebracht ist, sondern über Elemente wie Riemen oder Zahnräder mit der Abtriebswelle 32d verbunden ist. Genauso gut ist es denkbar, dass andere Kühlsysteme wie Peltierelemente, Kühlkörper, zusätzliche Aktoren mit Luftführungselementen oder dergleichen zum Einsatz kommen.

Am zweiten Gehäuseteil 34d der Handwerkzeugmaschine 16d ist zumindest teilweise die wiederaufladbare Batterie 14 angeordnet. Dabei ist ein Großteil einer Batterielänge l_{B} in das zweite Gehäuseteil 34d integriert. Die Einschubrichtung der wiederaufladbaren Batterie 14 liegt hierbei koaxial zur Haupterstreckungsrichtung des zweiten Gehäuseteils 34d.

Die Batteriespannung liegt in einem Bereich zwischen 3,6 und 42V, insbesondere zwischen 7,2 und 18 V. Bevorzugt beträgt die Batteriespannung aber 10,8 V. Die Werte der Batteriespannung berücksichtigen nicht mögliche Batteriespannungsschwankungen.

Ein Stellelement 70d ist an einer unteren Seite des zweiten Gehäuseteils 34d angeordnet. Das Stellelement 70d ist dazu vorgesehen, eine Drehzahl und/oder einen Betriebsmodus, wie beispielsweise einen Ecomodus oder einen Boostmodus zu stellen.

Eine Aufnahmeelement 96d ist ebenfalls an der unteren Seite des zweiten Gehäuseteils 34d angeordnet. Das Aufnahmeelement nimmt ein Werkzeug 98d auf, das für einen Wechsel eines Bearbeitungswerkzeugs vorgesehen ist.

Ein Druckelement 100d ist am ersten Gehäuseteil 30d angeordnet und dazu vorgesehen, einen werkzeuglosen Wechsel des Bearbeitungswerkzeugs zu ermöglichen.

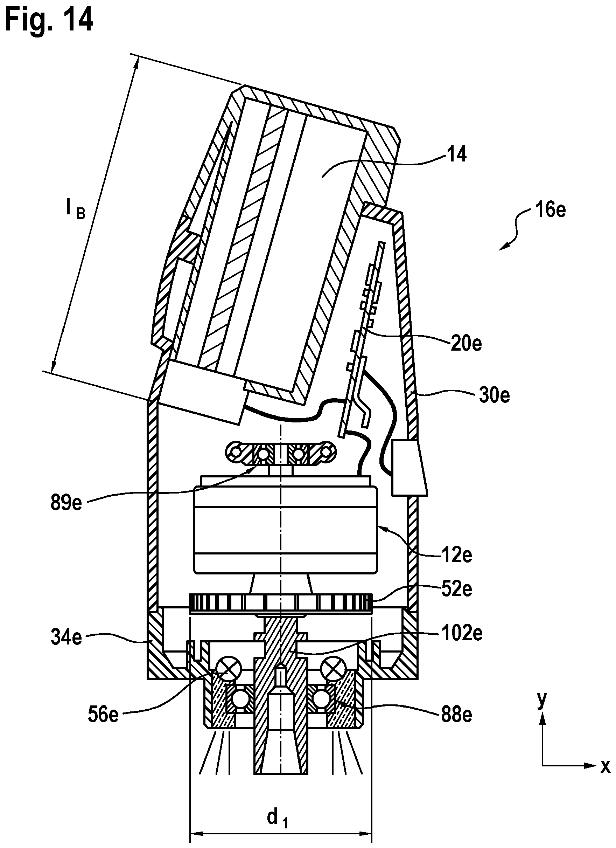

Figur 14 zeigt die Handwerkzeugmaschine 16e als Oberfräse 16e ausgebildet. Der elektronisch kommutierte Elektromotor 12e ist im ersten Gehäuseteil 30e angeordnet. Der elektronisch kommutierte Elektromotor 12e ist mit einer Abtriebswelle 32e verbunden. Die Abtriebswelle 32e setzt sich in einer Werkzeugspindel 102e fort. Es ist aber auch denkbar, dass die Abtriebswelle 32e über eine Kupplung mit der Werkzeugspindel 102e verbunden ist. Es ist aber auch denkbar, dass die Abtriebswelle 32e über ein konventionelles Getriebe oder einen Riementrieb mit der Werkzeugspindel 102e verbunden ist. Die Werkzeugspindel 102e trägt einen nicht näher dargestellten Werkzeughalter. Der Werkzeughalter ist beispielsweise eine Spannzange. In die Spannzange wird ein Bearbeitungswerkzeug gesteckt und mittels einer Überwurfmutter festgespannt. Das Bearbeitungswerkzeug ist beispielsweise ein Fräswerkzeug. Die Oberfräse 16e ist beispielsweise geeignet zum Fräsen von Nuten beziehungsweise zum Kantenfräsen.

Die Elektronik 20e ist unter anderem dazu vorgesehen, den elektronisch kommutierten Elektromotor 12e zu bestromen. Die Elektronik 20e ist im ersten Gehäuseteil 30e angeordnet.

Die Elektronikeinheit 20e wertet einen Wert eines Parameters, der die Oberfräse 16e charakterisiert oder mehrere die Oberfräse 16e charakterisierenden Parameter aus.

Es können ein oder mehrere der Parameter gemessen und ausgewertet werden. Weicht ein Istwert eines der Parameter in unzulässiger Weise von dessen Sollwert ab, wird insbesondere ein Ansteuersignal für eine Spannung des elektronisch kommutierten Elektromotor 12e derart gewählt, dass eine Leistungsabgabe an den elektronisch kommutierten Elektromotor 12e reduziert wird.

Im Ausführungsbeispiel ist der elektronisch kommutierte Elektromotor 12e ein Innenläufermotor. Der elektronisch kommutierte Elektromotor 12e kann der elektronisch kommutierte Elektromotor sein, der in Figur 5 gezeigt ist.

Wie in der Figur 14 ersichtlich, wird die Abtriebswelle 32e an ihrer dem Werkzeug zugewandten Seite in einem ersten Lager 88e drehbar aufgenommen und auf ihrer dem Werkzeug abgewandten Seite in einem zweiten Lager 89e drehbar aufgenommen.

Am ersten Gehäuseteil 30e ist zumindest teilweise die wiederaufladbare Batterie 14 angeschlossen. Dabei ist ein Großteil einer Batterielänge l_{B} in das erste Gehäuseteil 30e integriert. Die Einschubrichtung der wiederaufladbaren Batterie 14 erstreckt sich entlang einer y-Richtung der Oberfräse 16e.

Die Batteriespannung liegt in einem Bereich zwischen 3,6 und 42V, insbesondere zwischen 7,2 und 18 V. Bevorzugt beträgt die Batteriespannung aber 10,8 V. Die Werte der Batteriespannung berücksichtigen nicht mögliche Batteriespannungsschwankungen.

Eine Stellvorrichtung ist dazu vorgesehen, eine Drehzahl und/oder einen Betriebsmodus, wie beispielsweise einen Ecomodus oder einen Boostmodus zu stellen.

Die Drehzahl der erfindungsgemäßen en Oberfräse 16e liegt zwischen 8000 und 35000 min⁻¹, besonders zwischen 10000 und 25000 min⁻¹. Bevorzugt beträgt die Drehzahl 20000 min⁻¹.

Des Weiteren ist die Oberfräse 16e in einem Automatikmodus betreibbar. Im Automatikmodus wird die Drehzahl automatisch in Abhängigkeit eines bearbeitungswerkzeug- und/oder anwendungsspezifischen Parameters geregelt.

Ein bearbeitungswerkzeug- und/oder anwendungsspezifischer Parameter ist beispielsweise eine Vorschubgeschwindigkeit, ein Durchmesser und/oder eine geometrische Abmessung des Bearbeitungswerkzeugs beziehungsweise ein Material eines Bearbeitungswerkstücks.

Im Ausführungsbeispiel in Figur 14 ist an einem zweiten Gehäuseteil 34e der Oberfräse 16e die Beleuchtungsvorrichtung 56e angeordnet. Die Beleuchtungsvorrichtung 56e kann aber auch am ersten Gehäuseteil 30e angeordnet sein. Die Beleuchtungsvorrichtung 56e kann aber auch am Werkzeughalter angeordnet sein. Die Beleuchtungsvorrichtung 56e kann ein Arbeitsfeld ausleuchten, aber auch optische Informationen auf eine Umgebung projizieren. Die Beleuchtungsvorrichtung 56e kann sowohl eine einzelne LED, als auch mehrere LEDs aufweisen. Die LEDs können in verschiedenen Bauformen und Größen vorgesehen sein. Die Beleuchtungsvorrichtung 56e kann aber auch als punktförmige Lichtquelle ausgeführt sein. Es ist aber auch denkbar, dass die Beleuchtungsvorrichtung 56e als Projektionsvorrichtung ausgeführt ist. Die Beleuchtungsvorrichtung 56e kann Beleuchtungselemente aufweisen, die verschiedengestaltig am ersten Gehäuseteil 30e und/oder am zweiten Gehäuseteil 34e angeordnet sein können.

Der Lüfter 52e ist auf der Abtriebswelle 32e angebracht und zwischen dem elektronisch kommutierten Elektromotor 12e und der Werkzeugspindel 102e angeordnet. Es ist aber auch denkbar, dass der Lüfter 52e nicht auf der Abtriebswelle 32e angebracht ist, sondern über Elemente wie Riemen oder Zahnräder mit der Abtriebswelle 32e verbunden ist. Genauso gut ist es denkbar, dass andere Kühlsysteme wie Peltierelemente, Kühlkörper, zusätzliche Aktoren mit Luftführungselementen oder dergleichen zum Einsatz kommen.

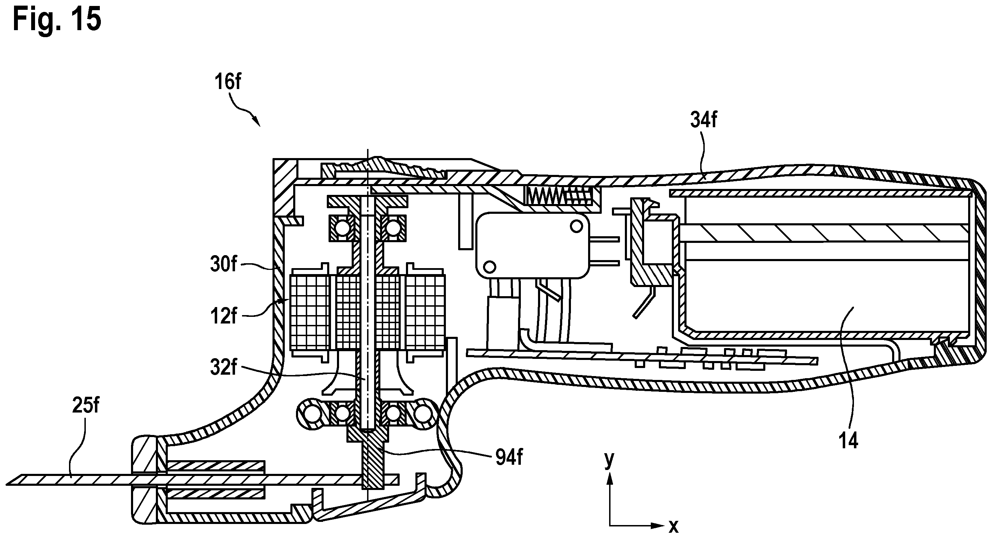

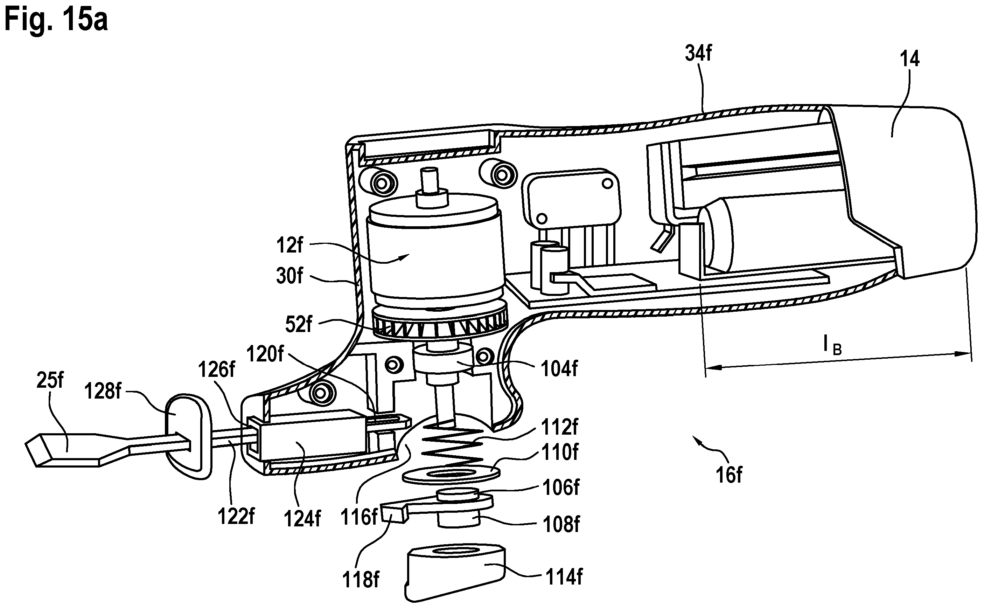

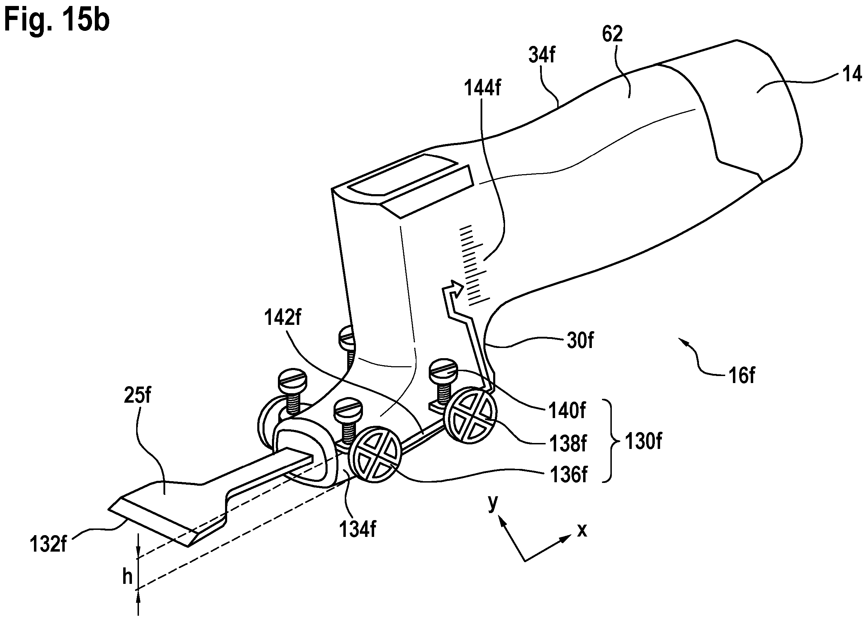

Figur 15 zeigt eine als Elektroschaber 16f ausgebildete Handwerkzeugmaschine 16f zur schabenden Bearbeitung von Oberflächen. Der Elektroschaber 16f besitzt einen im ersten Gehäuseteil 30f angeordneten elektronisch kommutierten Elektromotor 12f, der dazu vorgesehen ist, das Bearbeitungswerkzeug 25f anzutreiben. Das Bearbeitungswerkzeug 25f kann ein Schaber, Spachtel, Messer oder dergleichen sein. Der elektronisch kommutierten Elektromotor 12f ist mit einer Abtriebswelle 32f verbunden. Die Abtriebswelle 32f trägt ein Exzenterelement 94f. Auf das Exzenterelement 94f ist, wie in Figur 15a dargestellt, ein Kugellager 104f montiert. Ein dem Bearbeitungswerkzeug 25f zugewandtes Ende des Exzenterelements 94f greift in eine Durchgangsöffnung 106f eines Mitnahmeelements 108f.

Wie in Figur 15a ersichtlich, ist zwischen dem Mitnahmeelement 108f und dem Kugellager 104f eine Scheibe 110f und ein Federelement 112f angeordnet. Ein Verschlusselement 114f verschließt eine untere Öffnung 116f des ersten Gehäuseteils 30f. Bei Betätigung des Verschlusselementes 114f kann das Bearbeitungswerkzeug 25f des er Elektroschabers 16f entnommen werden. Das Mitnahmeelement 108f greift mit einer Nase 118f in eine Ausnehmung 120f eines Einspann-Endes eines Schafts 122f des Bearbeitungswerkzeugs 25f. Sobald die Abtriebswelle 32f rotiert, kreist das Exzenterelement 94f um seine Drehachse, wobei ihm das Mitnahmeelement 108f folgt.

Weiterhin ist in Figur 15a gezeigt, dass das Bearbeitungswerkzeug 25f in einer Längsführung 124f geführt ist. Die Längsführung 124f ist so ausgebildet, dass sie den Schaft 122f des Bearbeitungswerkzeugs 25f umgreift. Die Längsführung 124f ist mit einem durchgehenden, rechteckigen Führungsschlitz 126f ausgestattet. Durch den Führungsschlitz 126f tritt der Schaft 122f des Bearbeitungswerkzeugs 25f hindurch. Ein Dichtelement 128f verschließt eine vordere Öffnung des ersten Gehäuseteils 30f. Durch die vordere Öffnung des ersten Gehäuseteils 30f tritt der Schaft 122f des Bearbeitungswerkzeugs 25f hindurch.

Das Federelement 112f, die Scheibe 110f, das Mitnahmeelement 108f, das Verschlusselement 114f, das Bearbeitungswerkzeug 25f, die Längsführung 124f und das Dichtelement 128f sind in Figur 15a in Explosivdarstellung gezeigt.

Im Ausführungsbeispiel ist der elektronisch kommutierte Elektromotor 12f ein Innenläufermotor. Der elektronisch kommutierte Elektromotor 12f kann der elektronisch kommutierte Elektromotor sein, der in Figur 6 gezeigt ist.

Am zweiten Gehäuseteil 34f ist zumindest teilweise die wiederaufladbare Batterie 14 angeschlossen. Dabei ist ein Großteil einer Batterielänge l_{B} in das zweite Gehäuseteil 34f integriert und bildet mit diesem eine gemeinsame Achse, die koaxial zur Einschubrichtung der wiederaufladbaren Batterie 14 liegt.

Die Batteriespannung liegt in einem Bereich zwischen 3,6 und 42V, insbesondere zwischen 7,2 und 18 V. Bevorzugt beträgt die Batteriespannung aber 10,8 V. Die Werte der Batteriespannung berücksichtigen nicht mögliche Batteriespannungsschwankungen.

Das zweite Gehäuseteil 34f dient einem Benutzer des Elektroschabers 16f als Handgriff oder ist als Handgriff ausgebildet.

Der Lüfter 52f ist auf der Abtriebswelle 32f angebracht und zwischen dem elektronisch kommutierten Elektromotor 12f und dem Exzenterelement 94f angeordnet. Es ist aber auch denkbar, dass der Lüfter 52f nicht auf der Abtriebswelle 32f angebracht ist, sondern über Elemente wie Riemen oder Zahnräder mit der Abtriebswelle 32f verbunden ist. Genauso gut ist es denkbar, dass andere Kühlsysteme wie Peltierelemente, Kühlkörper, zusätzliche Aktoren mit Luftführungselementen oder dergleichen zum Einsatz kommen.

Figur 15b zeigt eine Ausführungsform Elektroschabers 16f mit einer Vorrichtung 130f zum Verstellen und/oder Feststellen einer Höhe h. Die Vorrichtung 130f ist am ersten Gehäuseteil 34f angeordnet. Die Höhe h ist hierbei der Abstand zwischen einem Arbeitsende 132f des Bearbeitungswerkzeugs 25f und einer gedachten Verlängerungslinie, die entlang einer unteren Gehäusewand 134f des ersten Gehäuseteils 30f in x-Richtung des Elektroschabers 16f verläuft. Das Bearbeitungswerkzeug 25f wird bezüglich der Höhe h geführt und fixiert, sodass das Bearbeitungswerkzeug 25f in ein Arbeitsmaterial, begrenzt auf eine vorbestimmte Schnittiefe, eindringen kann. Die Vorrichtung 130f umfasst mindestens ein erstes Höhenverstellmittel 136f und ein zweites Höhenverstellmittel 138f. Die Höhenverstellmittel 136f, 138f sind mit Hilfe mindestens eines höhenverstellbaren Befestigungsmittels 140f verstell- und fixierbar. Das erste Höhenverstellmittel 136f und das zweite Höhenverstellmittel 138f sind über eine Achse 142f miteinander verbunden. Eine Ableseeinheit 144f dient dazu, dem Bediener des Elektroschabers 16f die Schnittiefe anzuzeigen.

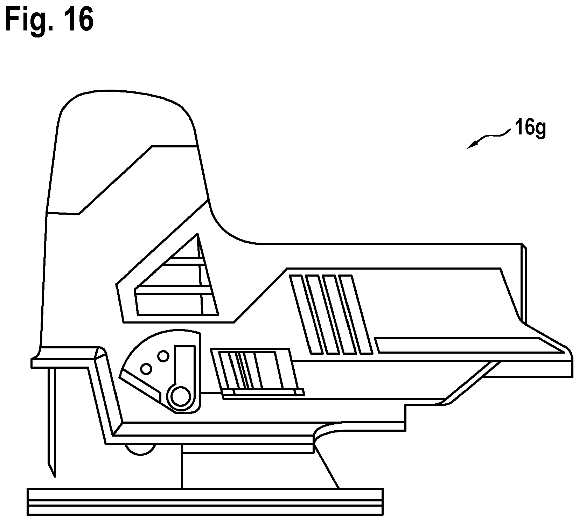

Wie in Figur 16 ersichtlich ist die Handwerkzeugmaschine 16g als Stichsäge 16g ausgebildet.

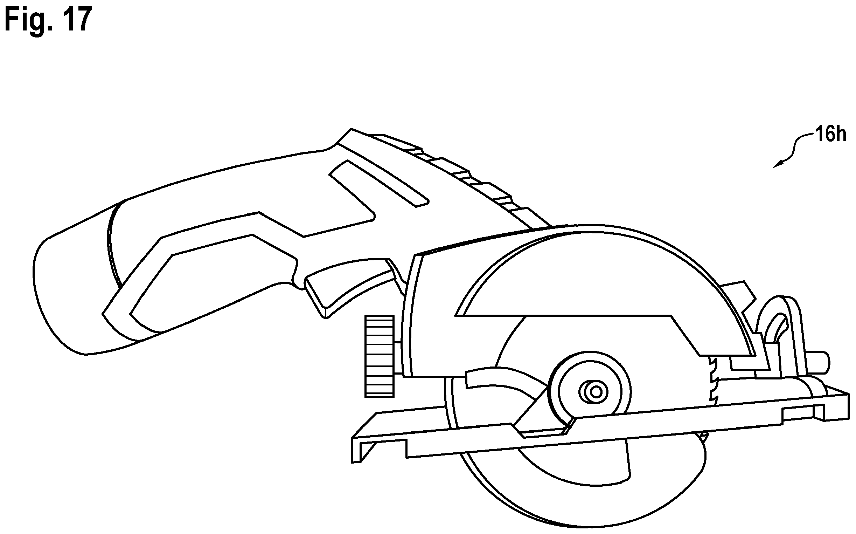

Wie in Figur 17 ersichtlich ist die Handwerkzeugmaschine 16h als Kreissäge 16h ausgebildet.

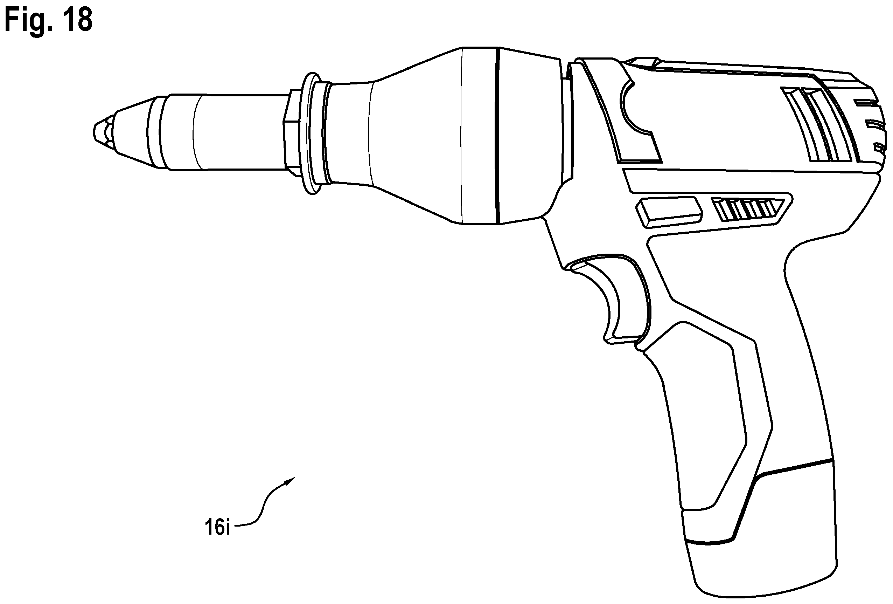

Wie in Figur 18 ersichtlich ist die Handwerkzeugmaschine 16i als es Nietgerät 16i ausgebildet.

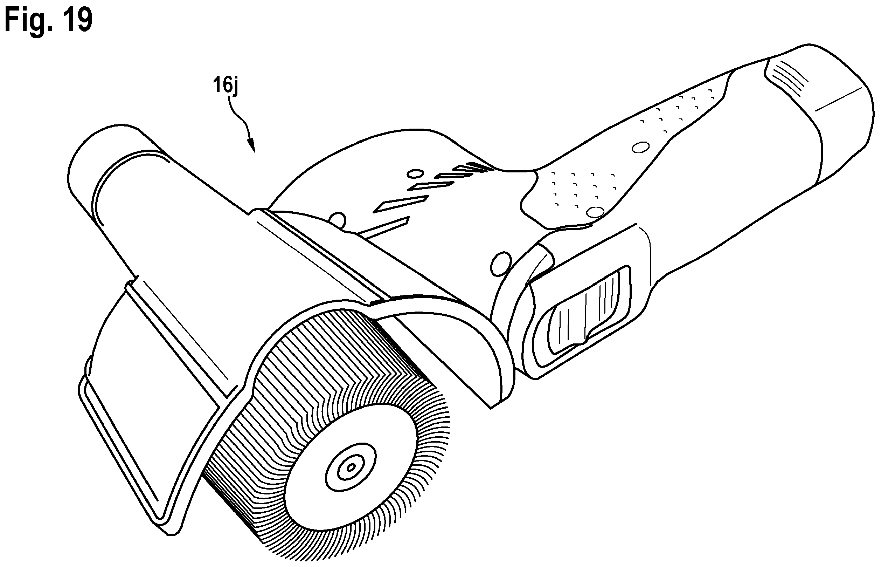

Wie in Figur 19 ersichtlich ist die Handwerkzeugmaschine 16j als es Rollersander 16j ausgebildet.

## Patentansprüche

1. System (10) zumindest umfassend:
mindestens eine erste Handwerkzeugmaschine (16a) mit einem ersten Gehäuseteil (30a), einem zweiten Gehäuseteil (34a), wobei die erste Handwerkzeugmaschine (16a) mindestens eine erste Schnittstelle für mindestens eine wiederaufladbare Batterie (14) einer Spannungsklasse aufweist, mit mindestens einem elektronisch kommutierten Elektromotor (12a) einer definierten Baugröße, wobei der elektronisch kommutierte Elektromotor (12a) vom ersten Gehäuseteil (30a) aufgenommen wird, mit mindestens einer ersten Elektronikeinheit (20a), wobei die erste Elektronikeinheit (20a) mindestens dazu vorgesehen ist, den elektronisch kommutierten Elektromotor (12a) zu steuern und/oder regeln, mit mindestens einem ersten Schaltelement (22a) zur Aktivierung des elektronisch kommutierten Elektromotors (12a), wobei der elektronisch kommutierte Elektromotor (12a) eine Abtriebswelle (32a) direkt antreibt, wobei die Abtriebswelle (32a) vom ersten Gehäuseteil (30a) aufgenommen wird und mindestens eine zweite Handwerkzeugmaschine (16b) mit einem ersten Gehäuseteil (30b) und einem zweiten Gehäuseteil (34b),
wobei die zweite Handwerkzeugmaschine (16b) vom Typ unterschiedlich zur ersten Handwerkzeugmaschine (16a) ist, wobei die zweite Handwerkzeugmaschine (16b) mindestens eine zweite Schnittstelle (18b) für die wiederaufladbare Batterie (14) der Spannungsklasse aufweist, mit mindestens einem elektronisch kommutierten Elektromotor (12b) einer definierten Baugröße, die sich von der ersten Baugröße unterscheidet, mit mindestens einer zweiten Elektronikeinheit (20b), die mindestens dazu vorgesehen ist, den elektronisch kommutierten Elektromotor (12b) zu bestromen, mit mindestens einem zweiten Schaltelement (22b) zur Aktivierung des elektronisch kommutierten Elektromotors (12b), sowie mit mindestens einer wiederaufladbaren Batterie (14), wobei die wiederaufladbare Batterie (14) sowohl mit der ersten Schnittstelle (18a) als auch mit der zweiten Schnittstelle (18b) korrespondieren kann,
**dadurch gekennzeichnet, dass** die erste und die zweite Elektronikeinheit (20a, 20b) jeweils von dem zweiten Gehäuseteil (34a, 34b) aufgenommen wird und, zumindest in einer x-Richtung, also in einer Haupterstreckungsrichtung des zweiten Gehäuseteils (34a, 34b), zumindest teilweise zwischen der Schnittstelle (18a, 18b) und dem ersten Gehäuseteil (30a, 30b) angeordnet ist.

2. System (10) nach Anspruch 1, wobei der elektronisch kommutierte Elektromotor (12a, 12b) eine erste Achse (26a, 26b) definiert, die koaxial zu einer Abtriebswelle (32a, 32b) liegt, die dazu vorgesehen ist, ein Bearbeitungswerkzeug () anzutreiben und die vom elektronisch kommutierten Elektromotor (12a, 12b) antreibbar, insbesondere direkt antreibbar ist.

3. System (10) nach einem der vorhergehenden Ansprüche, wobei die wiederaufladbare Batterie (14) zumindest teilweise in das zweite Gehäuseteil (34a, 34b) integriert ist, wobei das zweite Gehäuseteil (34a, 34b) einen Großteil einer Batterielänge I_{B} aufnimmt.

4. System (10) nach Anspruch 3, wobei die wiederaufladbare Batterie (14) mit dem zweiten Gehäuseteil (34a, 34b) eine zweite Achse (28a, 28b) definiert, die koaxial zur Einschubrichtung der wiederaufladbaren Batterie (14) liegt.

5. System (10) nach einem der Ansprüche 1 bis 2, wobei die wiederaufladbare Batterie (14) zumindest teilweise am zweiten Gehäuseteil (34a, 34b) angeordnet ist, wobei ein Großteil einer Batterielänge I_{B} außerhalb des zweiten Gehäuseteils (34a, 34b) liegt.

6. System (10) nach Anspruch 5, wobei die wiederaufladbare Batterie (14) mit dem zweiten Gehäuseteil (34a, 34b) eine zweite gemeinsame Achse (28a, 28b) definiert, die winklig, insbesondere rechtwinklig zur Einschubrichtung der wiederaufladbaren Batterie (14) liegt.

7. System (10) nach Anspruch 4 oder 6, wobei die erste Achse (26a, 26b) und die zweite Achse (28a, 28b) in einem Winkel a zueinander stehen, der zwischen 60° und 120°, besonders zwischen 80° und 100 ° liegt, bevorzugt aber ungefähr 90° beträgt.

8. System (10) nach Anspruch 4 oder 6, wobei die erste Achse (26a, 26b) und die zweite Achse (28a, 28b) in einem Winkel a zueinander stehen, der zwischen 10° und 20°, besonders zwischen 5° und 10 ° liegt, bevorzugt aber ungefähr 0° beträgt.

9. System (10) nach einem der vorhergehenden Ansprüche, wobei mindestens das zweite Gehäuseteil (34a, 36b) als Handgriff ausgebildet ist und/oder als Handgriff dient.

10. System (10) nach einem der vorhergehenden Ansprüche, wobei die Schnittstelle (18a, 18b) eine mechanische Schnittstelle ist.

11. System (10) nach einem der vorhergehenden Ansprüche, wobei das Schaltelement (22a, 22b) im zweiten Gehäuseteil (34a, 34b) angeordnet ist.

12. System (10) nach einem der vorhergehenden Ansprüche, wobei das Schaltelement (22a, 22b) als Schaltschieber, als Totmannschalter, als Gasgebeschalter oder als Arretierschalter ausgeführt sein kann.

13. System (10) nach Anspruch 12, wobei mehrere Schaltelemente (22a, 22b) ein Schaltsystem (38) bilden können.

14. System (10) nach einem der vorhergehenden Ansprüche, wobei der elektronisch kommutierte Elektromotor (12a, 12b) eine Länge l₁ aufweist, die zwischen 12 und 30 mm, besonders zwischen 15 und 25 mm, bevorzugt aber zwischen 18 und 24 mm liegt.

15. System (10) nach Anspruch 14, wobei der elektronisch kommutierte Elektromotor (12a, 12b) einen Durchmesser d₁ aufweist, der zwischen 30 und 50 mm, besonders zwischen 35 und 44 mm liegt, bevorzugt aber 38 mm beträgt.

16. System (10) nach einem der Ansprüche 1 bis 13, wobei der elektronisch kommutierte Elektromotor (12a, 12b) eine Länge l₂ aufweist, die zwischen 10 und 30 mm, besonders zwischen 15 und 25 mm liegt, bevorzugt aber 20 mm beträgt.

17. System (10) nach Anspruch 16, wobei der elektronisch kommutierte Elektromotor (12a, 12b) einen Durchmesser d₂ aufweist, der zwischen 30 und 50 mm, besonders zwischen 35 und 45 mm liegt, bevorzugt aber 44 mm beträgt.

18. System (10) nach einem der Ansprüche 1 bis 13, wobei der elektronisch kommutierte Elektromotor (12a, 12b) eine Länge l₃ aufweist, die zwischen 10 und 35 mm, besonders zwischen 15 und 30 mm liegt, bevorzugt aber 26 mm beträgt.

19. System (10) nach Anspruch 18, wobei der elektronisch kommutierte Elektromotor (12a, 12b) einen Durchmesser d₃ aufweist, der zwischen 40 und 60 mm, besonders zwischen 45 und 55 mm liegt, bevorzugt aber 50 mm beträgt.

20. System (10) nach einem der Ansprüche 14 bis 19, wobei der elektronisch kommutierte Elektromotor (12a, 12b) als Innenläufermotor oder als Außenläufermotor ausgebildet ist.

21. System (10) nach einem der Ansprüche 14 bis 20, wobei der elektronisch kommutierte Elektromotor (12a, 12b) einen Rotor (46) und ein Sensorelement (50) aufweist, welches dazu vorgesehen ist, eine Winkelstellung des Rotors (46) zu erkennen.

22. System (10) nach einem der Ansprüche 1 bis 21, wobei eine Länge des ersten Gehäuseteil zwischen 50 und 150 mm, insbesondere zwischen 80 und 120 mm liegt, bevorzugt aber 100 mm beträgt.

23. System (10) nach einem der vorhergehenden Ansprüche, wobei die Elektronikeinheit (20a, 20b) mit dem elektronisch kommutierten Elektromotor (12a, 12b) verbunden ist und mindestens einen den elektronisch kommutierten Elektromotor (12a, 12b) betreffenden Parameter überwacht und/oder diesen Parameter regelt oder steuert, wobei der Parameter eine Drehzahl, ein Strom oder eine Spannung des elektronisch kommutierten Elektromotors (12a, 12b) ist.

24. System (10) nach einem der vorhergehenden Ansprüche, wobei die Elektronikeinheit (20a, 20b) mit einem internen Schalter (36a, 36b) verbunden ist und mindestens einen den internen Schalter (36a, 36b) betreffenden Parameter überwacht und/oder diesen Parameter regelt oder steuert, wobei der Parameter mindestens ein Kurzschlusstrom sein kann, der über einen Schaltkontakt (37a, 37b) fließt.

25. System (10) nach einem der vorhergehenden Ansprüche, wobei die Elektronikeinheit (20a, 20b) mit der wiederaufladbaren Batterie (14) verbindbar ist und mindestens einen die wiederaufladbare Batterie (14) betreffenden Parameter überwacht und/oder diesen Parameter regelt oder steuert, wobei der Parameter mindestens eine Kapazität der wiederaufladbaren Batterie (14) und/oder ein Überlastzustand der wiederaufladbaren Batterie (14) sein kann.

26. System (10) nach einem der vorhergehenden Ansprüche, wobei die wiederaufladbare Batterie (14) eine Batteriespannung aufweist, die zwischen 3,6 und 42,0 V liegt, insbesondere zwischen 7,2 und 18 V liegt, bevorzugt aber 10,8V beträgt.

27. System (10) nach einem der vorhergehenden Ansprüche, wobei die Handwerkzeugmaschine (16a, 16b) in einem Energiesparmodus und/oder in einem Boostmodus betreibbar ist.

28. System (10) nach einem der vorhergehenden Ansprüche, wobei die Handwerkzeugmaschine (16a bis 16j) als mindestens eine Handwerkzeugmaschine der folgenden Gruppe ausgebildet ist:
a. Winkelschleifer (16a)
b. Exzenterschleifer (16b)
c. Geradschleifer (16c)
d. oszillierendes Multitool (16d)
e. Oberfräse (16e)
f. Elektroschaber (16f)
g. Stichsäge (16g)
h. Kreissäge (16h)
i. Nietgerät (16i)
j. Rollersander (16j)

## Claims

1. System (10) at least comprising:
at least one first hand-held power tool (16a) with a first housing part (30a), a second housing part (34a), wherein the first hand-held power tool (16a) has at least one first interface for at least one rechargeable battery (14) of a voltage class, with at least one electronically commutated electric motor (12a) of a defined construction size, wherein the electronically commutated electric motor (12a) is accommodated by the first housing part (30a), with at least one first electronic unit (20a),
wherein the first electronic unit (20a) is provided at least for controlling the electronically commutated electric motor (12a) in an open-loop and/or closed-loop manner, with at least one first switching element (22a) for activating the electronically commutated electric motor (12a), wherein the electronically commutated electric motor (12a) directly drives an output shaft (32a), wherein the output shaft (32a) is accommodated by the first housing part (30a), and at least one second hand-held power tool (16b) with a first housing part (30b) and a second housing part (34b),
wherein the second hand-held power tool (16b) is of a type different from the first hand-held power tool (16a), wherein the second hand-held power tool (16b) has at least one second interface (18b) for the rechargeable battery (14) of the voltage class, with at least one electronically commutated electric motor (12b) of a defined construction size, which differs from the first construction size, with at least one second electronic unit (20b), which is provided at least for supplying power to the electronically commutated electric motor (12b), with at least one second switching element (22b) for activating the electronically commutated electric motor (12b), and also with at least one rechargeable battery (14), the rechargeable battery (14) being able to correspond both with the first interface (18a) and with the second interface (18b),
**characterized in that** the first and the second electronic unit (20a, 20b) are each accommodated by the second housing part (34a, 34b) and are arranged, at least in an x direction, i.e. in a main direction of extent, of the second housing part (34a, 34b), at least partially between the interface (18a, 18b) and the first housing part (30a, 30b).

2. System (10) according to Claim 1, the electronically commutated electric motor (12a, 12b) defining a first axis (26a, 26b), which lies coaxially in relation to an output shaft (32a, 32b), which is provided for driving a machining tool () and which can be driven by the electronically commutated electric motor (12a, 12b), in particular can be driven directly.

3. System (10) according to either of the preceding claims, the rechargeable battery (14) being at least partially integrated in the second housing part (34a, 34b), the second housing part (34a, 34b) accommodating a large part of a battery length I_{B}.

4. System (10) according to Claim 3, the rechargeable battery (14) defining with the second housing part (34a, 34b) a second axis (28a, 28b), which lies coaxially in relation to the pushing-in direction of the rechargeable battery (14).

5. System (10) according to either of Claims 1 to 2, the rechargeable battery (14) being at least partially arranged on the second housing part (34a, 34b), a large part of a battery length I_{B} lying outside the second housing part (34a, 34b).

6. System (10) according to Claim 5, the rechargeable battery (14) defining with the second housing part (34a, 34b) a second common axis (28a, 28b), which lies at an angle, in particular a right angle, to the pushing-in direction of the rechargeable battery (14).

7. System (10) according to Claim 4 or 6, the first axis (26a, 26b) and the second axis (28a, 28b) being at an angle a to one another that lies between 60° and 120°, particularly between 80° and 100°, but with preference is approximately 90°.

8. System (10) according to Claim 4 or 6, the first axis (26a, 26b) and the second axis (28a, 28b) being at an angle a to one another that lies between 10° and 20°, particularly between 5° and 10°, but with preference is approximately 0°.

9. System (10) according to any one of the preceding claims, at least the second housing part (34a, 36b) being formed as a handle and/or serving as a handle.

10. System (10) according to any one of the preceding claims, the interface (18a, 18b) being a mechanical interface.

11. System (10) according to any one of the preceding claims, the switching element (22a, 22b) being arranged in the second housing part (34a, 34b).

12. System (10) according to any one of the preceding claims, it being possible for the switching element (22a, 22b) to be configured as a switching slide, as a dead man's switch, as an accelerating switch or as an arresting switch.

13. System (10) according to Claim 12, it being possible for multiple switching elements (22a, 22b) to form a switching system (38).

14. System (10) according to any one of the preceding claims, the electronically commutated electric motor (12a, 12b) having a length l₁, which lies between 12 and 30 mm, particularly between 15 and 25 mm, but with preference between 18 and 24 mm.

15. System (10) according to Claim 14, the electronically commutated electric motor (12a, 12b) having a diameter d₁, which lies between 30 and 50 mm, particularly between 35 and 44 mm, but with preference is 38 mm.

16. System (10) according to any one of Claims 1 to 13, the electronically commutated electric motor (12a, 12b) having a length l₂, which lies between 10 and 30 mm, particularly between 15 and 25 mm, but with preference is 20 mm.

17. System (10) according to Claim 16, the electronically commutated electric motor (12a, 12b) having a diameter d₂, which lies between 30 and 50 mm, particularly between 35 and 45 mm, but with preference is 44 mm.

18. System (10) according to any one of Claims 1 to 13, the electronically commutated electric motor (12a, 12b) having a length l₃, which lies between 10 and 35 mm, particularly between 15 and 30 mm, but with preference is 26 mm.

19. System (10) according to Claim 18, the electronically commutated electric motor (12a, 12b) having a diameter d₃, which lies between 40 and 60 mm, particularly between 45 and 55 mm, but with preference is 50 mm.

20. System (10) according to any one of Claims 14 to 19, the electronically commutated electric motor (12a, 12b) being formed as an internal-rotor motor or as an external-rotor motor.

21. System (10) according to any one of Claims 14 to 20, the electronically commutated electric motor (12a, 12b) having a rotor (46) and a sensor element (50), which is provided for detecting an angular position of the rotor (46).

22. System (10) according to any one of Claims 1 to 21, a length of the first housing part lying between 50 and 150 mm, in particular between 80 and 120 mm, but with preference being 100 mm.

23. System (10) according to any one of the preceding claims, the electronic unit (20a, 20b) being connected to the electronically commutated electric motor (12a, 12b) and monitoring at least one parameter concerning the electronically commutated electric motor (12a, 12b) and/or controlling this parameter in a closed-loop or open-loop manner, the parameter being a rotational speed, a current or a voltage of the electronically commutated electric motor (12a, 12b).

24. System (10) according to any one of the preceding claims, the electronic unit (20a, 20b) being connected to an internal switch (36a, 36b) and monitoring at least one parameter concerning the internal switch (36a, 36b) and/or controlling this parameter in a closed-loop or open-loop manner, it being possible for the parameter to be at least a short-circuit current, which flows by way of a switching contact (37a, 37b).

25. System (10) according to any one of the preceding claims, the electronic unit (20a, 20b) being able to be connected to the rechargeable battery (14) and monitoring at least one parameter concerning the rechargeable battery (14) and/or controlling this parameter in a closed-loop or open-loop manner, it being possible for the parameter to be at least a capacity of the rechargeable battery (14) and/or an overload state of the rechargeable battery (14).

26. System (10) according to any one of the preceding claims, the rechargeable battery (14) having a battery voltage that lies between 3.6 and 42.0 V, in particular lies between 7.2 and 18 V, but with preference is 10.8 V.

27. System (10) according to any one of the preceding claims, the hand-held power tool (16a, 16b) being operable in an energy-saving mode and/or in a boost mode.

28. System (10) according to any one of the preceding claims, the hand-held power tool (16a to 16j) being formed as at least one hand-held power tool of the following group:
a. angle grinder (16a)
b. eccentric grinder (16b)
c. straight grinder (16c)
d. oscillating multitool (16d)
e. router (16e)
f. electric scraper (16f)
g. jigsaw (16g)
h. circular saw (16h)
i. riveter (16i)
j. roller sander (16j)

## Revendications

1. Système (10) comprenant au moins :
au moins une première machine-outil manuelle (16a) avec une première partie de boîtier (30a), une seconde partie de boîtier (34a), la première machine-outil manuelle (16a) comportant au moins une première interface pour au moins une batterie rechargeable (14) d'une classe de tension, avec au moins un moteur électrique (12a) d'une taille définie, le moteur électrique à commutation électronique (12a) étant reçu par la première partie de boîtier (30a), avec au moins une première unité électronique (20a),
la première unité électronique (20a) étant prévue au moins pour commander et/ou réguler le moteur électrique à commutation électronique (12a), avec au moins un premier élément de commutation (22a) pour activer le moteur électrique à commutation électronique (12a), le moteur électrique à commutation électronique (12a) entraînant directement un arbre de sortie (32a), l'arbre de sortie (32a) étant reçu par la première partie de boîtier (30a), et au moins une deuxième machine-outil manuelle (16b) avec une première partie de boîtier (30b) et une seconde partie de boîtier (34b),
la deuxième machine-outil manuelle (16b) étant d'un type différent de la première machine-outil manuelle (16a), la deuxième machine-outil manuelle (16b) comportant au moins une deuxième interface (18b) pour la batterie rechargeable (14) de la classe de tension, avec au moins un moteur électrique à commutation électronique (12b) d'une taille définie, qui est différente de la première taille, avec au moins une deuxième unité électronique (20b), qui est prévue au moins pour alimenter en courant le moteur électrique à commutation électronique (12b), avec au moins un deuxième élément de commutation (22b) pour activer le moteur électrique à commutation électronique (12b), ain-si qu'avec au moins une batterie rechargeable (14), la batterie rechargeable (14) pouvant correspondre à la fois à la première interface (18a) et à la deuxième interface (18b),
**caractérisé en ce que** la première et la deuxième unité électronique (20a, 20b) sont reçues chacune par la seconde partie de boîtier (34a, 34b) et sont disposées au moins en partie entre l'interface (18a, 18b) et la première partie de boîtier (30a, 30b) au moins dans une direction x, c'est-à-dire dans une direction d'extension principale de la seconde partie de boîtier (34a, 34b).

2. Système (10) selon la revendication 1, le moteur électrique à commutation électronique (12a, 12b) définissant un premier axe (26a, 26b), qui est coaxial à un arbre de sortie (32a, 32b) qui est prévu pour entraîner un outil d'usinage et qui peut être entraîné, en particulier peut être directement entraîné, par le moteur électrique à commutation électronique (12a, 12b).

3. Système (10) selon l'une des revendications précédentes , la batterie rechargeable (14) étant intégrée au moins en partie dans la seconde partie de boîtier (34a, 34b), la seconde partie de boîtier (34a, 34b) recevant une grande partie d'une longueur de batterie I_{B}.

4. Système (10) selon la revendication 3, la batterie rechargeable (14) définissant, avec la seconde partie de boîtier (34a, 34b), un deuxième axe (28a, 28b) qui est coaxial à la direction d'insertion de la batterie rechargeable (14).

5. Système (10) selon l'une des revendications 1 à 2, la batterie rechargeable (14) étant disposée au moins en partie sur la seconde partie de boîtier (34a, 34b), une grande partie d'une longueur de batterie I_{B} se trouvant à l'extérieur de la seconde partie de boîtier (34a, 34b).

6. Système (10) selon la revendication 5, la batterie rechargeable (14) définissant avec la seconde partie de boîtier (34a, 34b) un deuxième axe commun (28a, 28b) qui se situe selon un angle, en particulier à angle droit, par rapport à la direction d'insertion de la batterie rechargeable (14).

7. Système (10) selon la revendication 4 ou 6, le premier axe (26a, 26b) et le deuxième axe (28a, 28b) formant l'un par rapport à l'autre un angle a, qui est compris entre 60° et 120°, en particulier entre 80° et 100°, de manière préférée toutefois est d'environ 90°.

8. Système (10) selon la revendication 4 ou 6, le premier axe (26a, 26b) et le deuxième axe (28a, 28b) formant l'un par rapport à l'autre un angle a, qui est compris entre 10° et 20°, en particulier entre 5° et 10°, de manière préférée toutefois est d'environ 0°.

9. Système (10) selon l'une des revendications précédentes, au moins la seconde partie de boîtier (34a, 36b) étant formée comme une poignée et/ou servant de poignée.

10. Système (10) selon l'une des revendications précédentes, l'interface (18a, 18b) étant une interface mécanique.

11. Système (10) selon l'une des revendications précédentes, l'élément de commutation (22a, 22b) étant disposé dans la seconde partie de boîtier (34a, 34b).

12. Système (10) selon l'une des revendications précédentes, l'élément de commutation (22a, 22b) pouvant être réalisé sous la forme d'un coulisseau de commutation, d'un commutateur homme-mort, d'un commutateur d'accélération ou d'un commutateur de blocage.

13. Système (10) selon la revendication 12, plusieurs éléments de commutation (22a, 22b) pouvant former un système de commutation (38).

14. Système (10) selon l'une des revendications précédentes, **caractérisé en ce que** le moteur électrique à commutation électronique (12a, 12b) présente une longueur l₁, qui est comprise entre 12 et 30 mm, en particulier entre 15 et 25 mm, toutefois de manière préférée entre 18 et 24 mm.

15. Système (10) selon la revendication 14, le moteur électrique à commutation électronique (12a, 12b) présentant un diamètre d₁, qui est compris entre 30 et 50 mm, en particulier entre 35 et 44 mm, qui est toutefois de manière préférée de 38 mm.

16. Système (10) selon l'une des revendications 1 à 13, **caractérisé en ce que** le moteur électrique à commutation électronique (12a, 12b) présente une longueur l₂, qui est comprise entre 10 et 30 mm, en particulier entre 15 et 25 mm, qui est toutefois de manière préférée de 20 mm.

17. Système (10) selon la revendication 16, le moteur électrique à commutation électronique (12a, 12b) présentant un diamètre d₂, qui est compris entre 30 et 50 mm, en particulier entre 35 et 45 mm, qui est toutefois de manière préférée de 44 mm.

18. Système (10) selon l'une des revendications 1 à 13, **caractérisé en ce que** le moteur électrique à commutation électronique (12a, 12b) présente une longueur l₃, qui est comprise entre 10 et 35 mm, en particulier entre 15 et 30 mm, qui est toutefois de manière préférée de 26 mm.

19. Système (10) selon la revendication 18, le moteur électrique à commutation électronique (12a, 12b) présentant un diamètre d₃, qui est compris entre 40 et 60 mm, en particulier entre 45 et 55 mm, qui est toutefois de manière préférée de 50 mm.

20. Système (10) selon l'une des revendications 14 à 19, le moteur électrique à commutation électronique (12a, 12b) étant formé comme un moteur à induit interne ou comme un moteur à induit externe.

21. Système (10) selon l'une des revendications 14 à 20, le moteur électrique à commutation électronique (12a, 12b) comportant un rotor (46) et un élément de détection (50) qui est prévu pour détecter une position angulaire du rotor (46).

22. Système (10) selon l'une des revendications 1 à 21, une longueur de la première partie de boîtier étant comprise entre 50 et 150 mm, en particulier entre 80 et 120 mm, étant toutefois de manière préférée de 100 mm.

23. Système (10) selon l'une des revendications précédentes, l'unité électronique (20a, 20b) étant reliée au moteur électrique à commutation électronique (12a, 12b) et surveillant au moins un paramètre concernant le moteur électrique à commutation électronique (12a, 12b) et/ou régulant ou commandant ledit paramètre, le paramètre étant une vitesse de rotation, un courant ou une tension du moteur électrique à commutation électronique (12a, 12b).

24. Système (10) selon l'une des revendications précédentes, l'unité électronique (20a, 20b) étant reliée à un commutateur interne (36a, 36b) et surveillant au moins un paramètre concernant le commutateur interne (36a, 36b) et/ou régulant ou commandant ledit paramètre, le paramètre pouvant être au moins un courant de court-circuit qui est fourni par un contact de commutation (37a, 37b).

25. Système (10) selon l'une des revendications précédentes, l'unité électronique (20a, 20b) pouvant être reliée à la batterie rechargeable (14) et surveillant au moins un paramètre concernant la batterie rechargeable (14) et/ou régulant ou commandant ledit paramètre, le paramètre pouvant être au moins une capacité de la batterie rechargeable (14) et/ou un état de surcharge de la batterie rechargeable (14).

26. Système (10) selon l'une des revendications précédentes, la batterie rechargeable (14) comportant une tension de batterie qui est comprise entre 3,6 et 42,0 V, en particulier est comprise entre 7,2 et 18 V, toutefois est de manière préférée de 10,8 V.

27. Système (10) selon l'une des revendications précédentes, la machine-outil manuelle (16a, 16b) pouvant fonctionner dans un mode d'économie d'énergie et/ou dans un mode d'amplification.

28. Système (10) selon l'une des revendications précédentes, la machine-outil manuelle (16a à 16j) étant formée comme au moins une machine-outil manuelle du groupe suivant :
a. meuleuse d'angle (16a)
b. meuleuse excentrique (16b)
c. meuleuse rectiligne (16c)
d. outil polyvalent oscillant (16d)
e. défonceuse (16e)
f. rabot électrique (16f)
g. scie sauteuse (16g)
h. scie circulaire (16h)
i. appareil de rivetage (16i)
j. rectifieuse de cylindres (1 6j)
